# EUROPEAN PATENT SPECIFICATION

(11) **EP 4 586 600 B1**
(45) Date of publication and mention of the grant of the patent: **11.11.2026**
(21) Application number: 24220153.1
(22) Date of filing: 16.12.2024
(51) Int. Cl.: H04N 1/00, G06F 3/12, G03G 15/00, G06T 7/00

(54) **PRINTING SYSTEM, IMAGE PROCESSING APPARATUS, METHOD OF CONTROLLING THE SAME, PROGRAM AND STORAGE MEDIUM**
DRUCKSYSTEM, BILDVERARBEITUNGSVORRICHTUNG, VERFAHREN ZUR STEUERUNG DAVON, PROGRAMM UND SPEICHERMEDIUM
SYSTÈME D'IMPRESSION, APPAREIL DE TRAITEMENT D'IMAGE, SON PROCÉDÉ DE COMMANDE, PROGRAMME ET SUPPORT DE STOCKAGE

(30) Priority: 12.01.2024 JP 2024003318
(43) Date of publication of application: 16.07.2025
(73) Proprietor: CANON KABUSHIKI KAISHA, Tokyo 146-8501 (JP)
(72) Inventor: OYA, Masashi, Tokyo, 146-8501 (JP)
(74) Representative: TBK

(56) References cited:
- EP-A1- 4 060 414
- EP-A1- 4 300 201
- JP-A- 2007 280 135
- US-A1- 2005 240 376
- US-A1- 2011 075 193
- US-A1- 2020 322 487

## Description

### BACKGROUND OF THE INVENTION

### Field of the Invention

The present disclosure relates to a printing system, an image processing apparatus, a method of controlling the same, program and a storage medium.

### Description of the Related Art

A printed product output from a printing unit of an image forming apparatus may have an image defect such as a stain made by a coloring material such as ink or toner adhering to an unintended position on the printed product or color loss that is a phenomenon in which the printed product has a color lighter than an intended color due to a malfunction of the image forming apparatus.

In order to repair such a malfunction of the image forming apparatus, there are image diagnosis techniques for identifying factors of the malfunction and taking measures according to the identified factors. According to the image diagnosis techniques, factors of a malfunction are identified based on features such as the color and size of a print defect, and corrective measures corresponding to the factors, which are prepared in advance, are taken.

Japanese Patent Laid-Open No. 2019-133020 describes an image diagnosis technique for determining factors of a malfunction by printing a test chart for diagnosis prepared in advance with use of a printing unit and determining the factors of the malfunction based on image data obtained by reading the printed test chart.

However, according to the technique described in this document, it is necessary to print the test chart for diagnosis in order to identify factors of malfunctions of the image forming apparatus and an image reading device. Accordingly, it is necessary to designate a paper feeding unit storing sheets on which the test chart is to be printed, and adjust a fixing temperature of the printing unit according to the designated sheets. Therefore, when there arises a need to perform image diagnosis processing during printing of a printed product, the printing is suspended and the image diagnosis processing is performed with use of the test chart, and accordingly, it is necessary to designate the paper feeding unit and change print conditions, for example. Consequently, downtime until the printing is resumed becomes long and the productivity decreases.

Document US 2005/240 376 A1 discloses a failure diagnosis method that diagnoses failure occurring in an image forming apparatus. The failure causes defect in an image output from the image forming apparatus. The failure diagnosis method includes acquiring operation state signals indicating operation states during the image forming apparatus operating in different operation conditions, respectively; and analyzing the acquired operation state signals based on a failure probability model, which is obtained by modeling a cause of the failure occurring in the image forming apparatus with using probabilities, to execute failure diagnosis with respect to each of constituent members constituting the image forming apparatus.

### SUMMARY OF THE INVENTION

Embodiments of the present disclosure eliminate the above-mentioned issues with conventional technology.

A feature of embodiments of the present disclosure is to provide a technique for reducing downtime by utilizing read image data of a printed product in which an image defect has been detected.

The present invention in its first aspect provides a printing system as specified in claims 1 to 12.

The present invention in its second aspect provides an image processing apparatus as specified in claim 13.

The present invention in its third aspect provides a method of controlling an image processing apparatus as specified in claim 14.

The present invention in its fourth aspect provides a program as specified in claim 15.

The present invention in its fifth aspect provides a storage medium as specified in claim 16.

Further features of the present disclosure will become apparent from the following description of exemplary embodiments with reference to the attached drawings.

### BRIEF DESCRIPTION OF THE DRAWINGS

The accompanying drawings, which are incorporated in and constitute a part of the specification, illustrate embodiments of the disclosure and, together with the description, serve to explain the principles of the disclosure.
FIG. 1 is a diagram showing an example configuration of a printing system (image processing system) according to a first embodiment of the present invention.
FIG. 2 depicts a schematic cross-sectional view showing a hardware configuration example of an image forming apparatus according to the first embodiment.
FIG. 3 is a schematic functional block diagram of the image forming apparatus, an external controller, and a client PC according to the first embodiment.
FIG. 4 is a flowchart for describing image diagnosis processing performed by a diagnosis unit according to the first embodiment.
FIG. 5 is a flowchart for describing image diagnosis processing performed by a diagnosis unit according to a second embodiment.
FIG. 6 is a flowchart for describing image diagnosis processing performed by a diagnosis unit according to a third embodiment.
FIG. 7A is a diagram showing an example of characteristics of a filter for emphasizing dot-like defects in the embodiments.
FIG. 7B is a diagram showing an example of characteristics of a filter for emphasizing linear defects in the embodiments.
FIG. 8 is a flowchart for describing processing for calculating features and creating feature table data in step S410 shown in FIG. 4.
FIGS. 9A to 9C are schematic diagrams respectively showing diagnosable regions that are used to calculate features in the image diagnosis processing according to the first embodiment.
FIG. 10 is a flowchart for describing processing for creating feature table data including factors and measures in step S812 shown in FIG. 8.
FIG. 11 depicts a view showing an example of UI display when there is a stain on a reading surface of an image reading device and a user is requested to do cleaning in the first embodiment.
FIG. 12 depicts a view showing an example of a diagnosis report according to the first embodiment.
FIG. 13 is a diagram showing an example of a diagnosis report list according to the first embodiment.
FIG. 14 is a diagram showing an example of the diagnosis report list to which a service mode is added according to the first embodiment.
FIG. 15 is a flowchart for describing re-diagnosis processing in step S501 shown in FIG. 5 according to the second embodiment.
FIG. 16 is a flowchart for describing a flow of image diagnosis processing that is performed in the third embodiment after printing is stopped for inspection in step S409.
FIG. 17 depicts a view showing an example of a test chart that is used in the image diagnosis processing according to the third embodiment.
FIGS. 18A and 18B are diagrams showing an example of a calculation result of features other than cycle information according to the first embodiment.
FIG. 18C is a diagram showing an example of factor identification table data.
FIG. 18D is a diagram showing an example of a table obtained by writing factors and measures into feature table data.

### DESCRIPTION OF THE EMBODIMENTS

Embodiments of the present disclosure will be described hereinafter in detail, with reference to the accompanying drawings. It is to be understood that the following embodiments are not intended to limit the claims of the present disclosure, and that not all of the combinations of the aspects that are described according to the following embodiments are necessarily required with respect to the means to solve the issues according to the present disclosure. Further, in the accompanying drawings, the same or similar configurations are assigned the same reference numerals, and redundant descriptions are omitted.

### First Embodiment

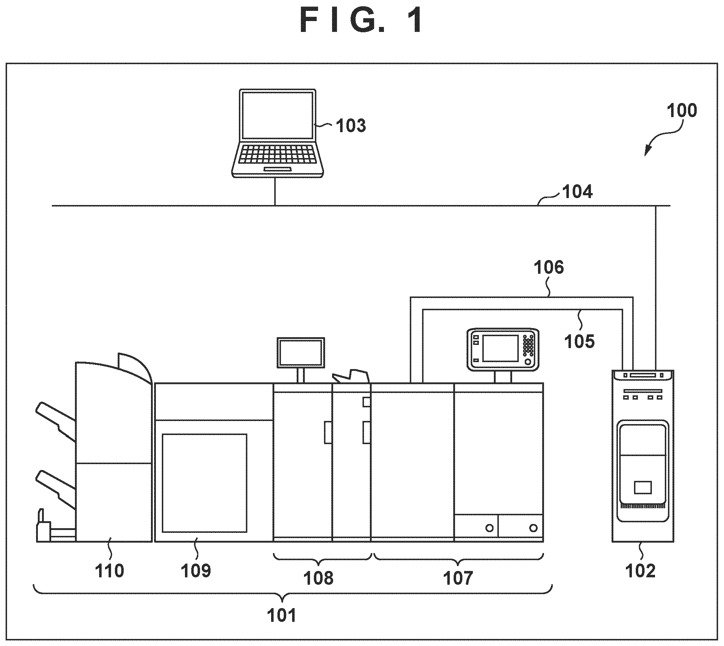

FIG. 1 is a diagram showing an example configuration of a printing system (image processing system) according to a first embodiment of the present invention.

As shown in FIG. 1, the printing system 100 includes an image forming apparatus 101 and an external controller 102. The image forming apparatus 101 and the external controller 102 are connected to each other via an internal LAN 105 and a video cable 106 in a communication-enabling manner. The external controller 102 is connected to a client PC 103 via an external LAN 104 in a communication-enabling manner.

The client PC 103 can give a print instruction to the external controller 102 via the external LAN 104. A printer driver that has a function of converting image data that is a target of print processing to a page description language (PDL) processable by the external controller 102 is installed in the client PC 103. A user who wants to print an image can give a print instruction from various applications installed in the client PC 103 via the printer driver by operating the client PC 103. The printer driver creates PDL data, which is print data, based on the print instruction from the user and transmits the PDL data to the external controller 102. Upon receiving the PDL data from the client PC 103, the external controller 102 analyzes and interprets the received PDL data. The external controller 102 rasterizes the PDL data based on the result of interpretation, and creates a bitmap image (print image data) having a resolution suitable for the image forming apparatus 101. Then, the external controller 102 supplies a print job including the bitmap image to the image forming apparatus 101 to perform the print instruction.

Next, the following describes the image forming apparatus 101. A plurality of devices having different functions are connected to the image forming apparatus 101 to enable complex processing such as bookbinding. The image forming apparatus 101 includes a printing unit 107 (image forming unit), a diagnosis unit (diagnostic apparatus) 108, a stacker 109, and a finisher 110. The following describes these units.

The printing unit 107 prints an image on a printing material (paper, sheet, etc.) in accordance with the print job and discharges the printed printing material. The printed printing material discharged from the printing unit 107 is conveyed inside the diagnosis unit 108, the stacker 109, and the finisher 110 in this order. In the first embodiment, the image forming apparatus 101 of the printing system 100 is an example of an image forming apparatus, but the printing unit 107 included in the image forming apparatus 101 may be referred to as "the image forming apparatus". The printing unit 107 forms (prints) an image on a printing material fed from a paper feeding unit under the printing unit 107 and conveyed to the printing unit 107 with use of toner (coloring materials).

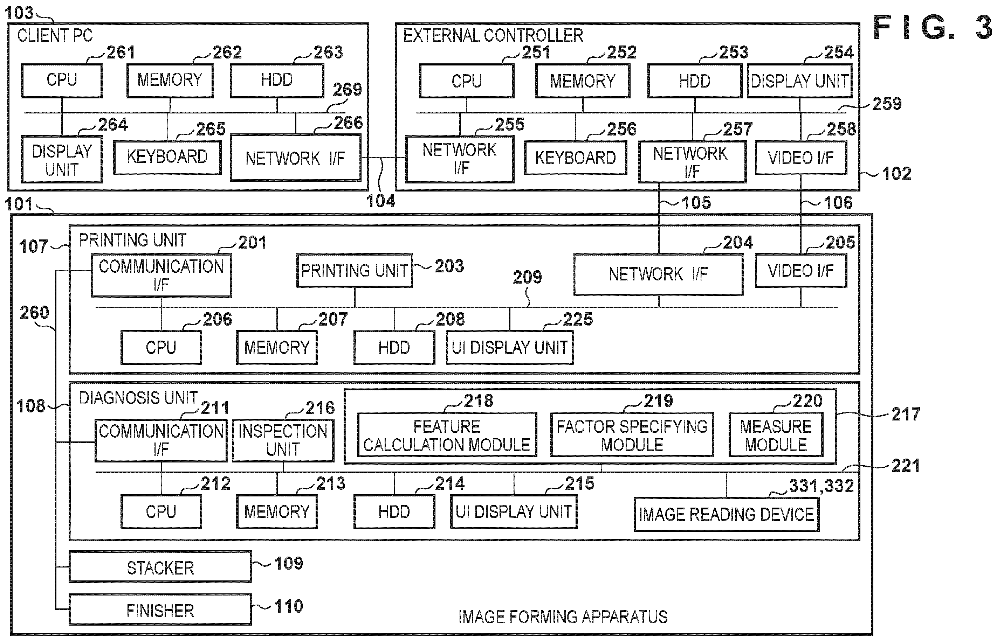

Based on the image printed by the printing unit 107 on the printing material conveyed through a conveyance path, the diagnosis unit 108 determines the presence or absence of a defect (image defect) in the printed image and identifies locations of malfunctions in the image forming apparatus 101 and image reading units 331 and 332 (FIG. 3). Specifically, the diagnosis unit 108 reads the image printed on the conveyed printing material to obtain read image data, performs inspection processing for determining the presence or absence of an image defect in the read image data, and also performs image diagnosis processing for identifying the location of a malfunction.

In the inspection processing for determining the presence or absence of an image defect, the presence or absence of an image defect is determined by comparing outcome data (reference image) that is based on input image data obtained from the user and the read image data (scanned image) of the printing material (hereinafter referred to as "the printed product") on which an image corresponding to the input image data has been printed. In the image diagnosis processing for identifying the location of a malfunction, diagnosis regions are extracted from the input image data. Furthermore, features are calculated from an image defect region where there is a large difference between a signal value of the reference image and a signal value of the read image data in the extracted diagnosis regions, and factors of the malfunction are identified based on the features. Details of the inspection processing and the image diagnosis processing will be described later.

The stacker 109 is a device capable of stacking a large number of printed printing materials thereon.

The finisher 110 is a device capable of executing finishing processing such as stapling, punching, and saddle-stitch binding on printed printing materials conveyed to the finisher 110. After being subjected to the processing by the finisher 110, the printing materials are discharged onto a predetermined paper discharge tray.

Note that, in the example of the system shown in FIG. 1, the external controller 102 is connected to the image forming apparatus 101, but the present embodiment is also applicable to a configuration different from this configuration. For example, a configuration is also possible in which the image forming apparatus 101 is directly connected to the external LAN 104, and print data is transmitted from the client PC 103 to the image forming apparatus 101 not via the external controller 102. In this case, data analysis and rasterization of print data are executed by the image forming apparatus 101.

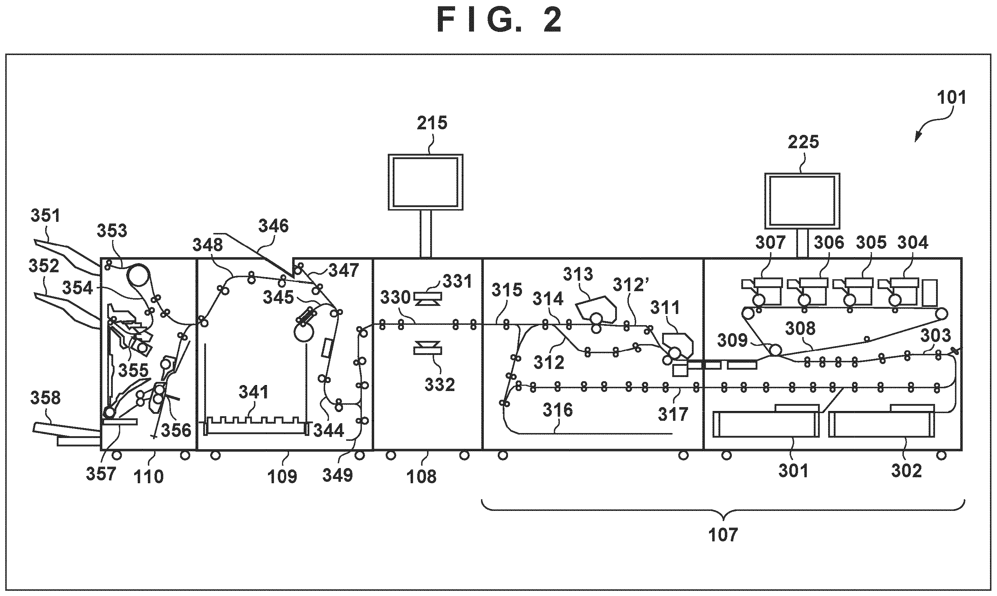

FIG. 2 depicts a schematic cross-sectional view showing a hardware configuration example of the image forming apparatus 101 according to the first embodiment. The following describes a specific example of operations of the image forming apparatus 101 with reference to FIG. 2.

The printing unit 107 includes a plurality of paper feeding decks. In the first embodiment, the printing unit 107 includes two types of paper feeding decks 301 and 302. Various printing materials (sheets) are stored in the respective paper feeding decks 301 and 302. The uppermost printing material of printing materials stored in each paper feeding deck is separated and fed to a conveyance path 303. The printing unit 107 obtains sheet information of sheets stored in each paper feeding deck based on a sensor on the paper feeding deck and an instruction from the user. The sheet information in the first embodiment indicates the size, grammage, and surface properties of the sheets. The printing unit 107 obtains these types of sheet information and stores the obtained information in a HDD, which will be described later. The size of the sheets is automatically obtained by reading the position of a guide (not shown) in the paper feeding deck with use of the sensor. The other information is obtained in response to selection and input made by the user through a screen for changing the sheet information, which will be described later.

Image forming stations 304 to 307 respectively include photosensitive drums (photosensitive bodies) and form toner images on the photosensitive drums with use of toners of different colors. Specifically, the image forming stations 304 to 307 form the toner images with use of toners of yellow (Y), magenta (M), cyan (C), and black (K), respectively. The toner images of the respective colors formed in the image forming stations 304 to 307 are successively transferred onto an intermediate transfer belt 308 (primary transfer) and superposed. The toner images transferred to the intermediate transfer belt 308 are conveyed to a secondary transfer position 309 along with rotation of the intermediate transfer belt 308. At the secondary transfer position 309, the toner images are transferred from the intermediate transfer belt 308 to a printing material conveyed through the conveyance path 303 (secondary transfer). After the secondary transfer, the printing material is conveyed to a fixing unit 311. The fixing unit 311 includes pressing rollers and heating rollers. Fixing processing for fixing the toner images to the printing material is performed by applying heat and pressure to the printing material passing between these rollers. The printing material that has passed the fixing unit 311 is conveyed through a conveyance path 312 to a conveyance path 315 that conveys the printing material to the diagnosis unit 108. Thus, a color image is formed (printed) on the printing material.

When it is necessary to further perform fixing processing according to the type of the printing material, the printing material that has passed the fixing unit 311 is guided to a conveyance path 312' on which a fixing unit 313 is provided. The fixing unit 313 further performs fixing processing on the printing material conveyed by the conveyance path 312' and then supplies the printing material to a conveyance path 314. The printing material that has passed the fixing unit 311 or the fixing unit 313 as described above is conveyed to a conveyance path 315. When an operation mode for double-side printing is set, a printing material with an image printed on a first surface thereof is conveyed by the conveyance path 312 or the conveyance path 314 and guided to a reversing path 316. The printing material is reversed on the reversing path 316 and then guided to a double-sided feeding path 317 and conveyed to the secondary transfer position 309. A toner image is transferred to a second surface of the printing material, which is opposite to the first surface, at the secondary transfer position 309. Thereafter, the printing material passes the fixing unit 311 (and the fixing unit 313), and thus the formation of the color image on the second surface of the printing material is complete.

The printed printing material on which an image has been formed (printed) in the printing unit 107 and that has been conveyed to the conveyance path 315 is then conveyed to the diagnosis unit 108. The diagnosis unit 108 includes the image reading devices 331 and 332 including contact image sensors (CISs) on a conveyance path 330 to which the printed printing material is conveyed from the printing unit 107. The image reading devices 331 and 332 face each other with the conveyance path 330 disposed therebetween. The image reading devices 331 and 332 are configured to read an upper surface (the first surface) and a lower surface (the second surface) of the printing material, respectively. Note that the image reading devices may be constituted by charge coupled devices (CCDs) or line scan cameras, instead of CISs.

The diagnosis unit 108 performs the inspection processing for determining the presence or absence of an image defect in the printed product (printing material) based on image data obtained by reading the printed product conveyed along the conveyance path 330 with use of the image reading devices 331 and 332. Specifically, reading processing for reading the printed product is performed with use of the image reading devices 331 and 332 at a timing at which the conveyed printed product reaches a predetermined position. When the reading processing is complete, the diagnosis unit 108 performs the inspection processing based on the read image data. If it is determined in the inspection processing that the printed product includes an image defect, the diagnosis unit 108 determines whether or not to stop the inspection based on inspection results of read image data for which the determination in the inspection processing has been completed. Specifically, the inspection is stopped if image defects have been consecutively detected in at least a predetermined number of printed products. It is desirable that the predetermined number can be designated by the user. If it is determined to stop the inspection, the diagnosis unit 108 stops operations of the printing unit 107 and the image reading devices 331 and 332, and performs the image diagnosis processing for making a diagnosis as to whether the location of a malfunction that caused the image defects is included in the printing unit and the image reading devices. Printed products that have passed the diagnosis unit 108 are successively conveyed to the stacker 109. The processing performed by the diagnosis unit 108 will be described later in detail.

The stacker 109 includes a stacking tray 341 on which printed products conveyed from the diagnosis unit 108 located upstream in the conveyance direction of the printed products are stacked. The printed products that have passed the diagnosis unit 108 are conveyed along a conveyance path 344 in the stacker 109. The printed products conveyed along the conveyance path 344 are guided to a conveyance path 345 to be stacked on the stacking tray 341. The stacker 109 further includes an escape tray 346 as a paper discharge tray. In the first embodiment, the escape tray 346 is used to discharge a printed product in which an image defect has been detected by the diagnosis unit 108. The printed product including the detected image defect and conveyed along the conveyance path 344 is guided to a conveyance path 347 to be conveyed to the escape tray 346. A printed product that has been conveyed through the stacker 109 without being stacked or discharged is conveyed along a conveyance path 348 to the finisher 110 located downstream of the stacker 109. The stacker 109 further includes a reversing unit 349 for reversing the orientation of a printed product that is being conveyed. The reversing unit 349 is used to make the orientation of a printed product input to the stacker 109 the same as the orientation of the printed product stacked on the stacking tray 341 and output from the stacker 109, for example. Note that a printed product that is conveyed to the finisher 110 without being stacked in the stacker 109 is not reversed by the reversing unit 349.

The finisher 110 executes a finishing function designated by the user on printed products conveyed from the diagnosis unit 108 located upstream in the conveyance direction of the printed products. In the first embodiment, the finisher 110 has finishing functions such as a stapling function (one-point or two-point stapling), a punching function (two holes or three holes), and a saddle-stitch binding function. The finisher 110 includes two paper discharge trays 351 and 352. When finishing processing is not performed by the finisher 110, a printed product conveyed to the finisher 110 is discharged to the paper discharge tray 351 via a conveyance path 353. When finishing processing such as stapling is performed by the finisher 110, a printed product conveyed to the finisher 110 is guided to a conveyance path 354. The finisher 110 executes the finishing processing designated by the user on the printed product conveyed along the conveyance path 354 with use of a finishing unit 355, and then discharges the printed product subjected to the finishing processing to the paper discharge tray 352. The paper discharge trays 351 and 352 can be elevated and lowered, and it is possible to stack sheets subjected to the finishing processing in the finishing unit 355 on the paper discharge tray 351 by lowering the paper discharge tray 351. When saddle-stitch binding is designated, sheets are stapled at their centers in a saddle-stitch binding unit 356 and then folded in half and output to a saddle-stitch binding tray 358 via a sheet conveyance path 357. The saddle-stitch binding tray 358 is configured as a belt conveyor, and the bound sheets subjected to saddle-stitch binding and stacked on the saddle-stitch binding tray 358 are conveyed to the left in FIG. 2.

FIG. 3 is a schematic functional block diagram of the image forming apparatus 101, the external controller 102, and the client PC 103 according to the first embodiment.

First, the following describes the printing unit 107 of the image forming apparatus 101.

The printing unit 107 includes a communication interface (I/F) 201, a network I/F 204, a video I/F 205, a CPU 206, a memory 207, a hard disk drive (HDD) 208, and a user interface (UI) display unit 225. The printing unit 107 further includes a print unit (printer engine) 203. These are connected to each other via a system bus 209 in a manner such that data can be transmitted and received therebetween. The communication I/F 201 is connected to the diagnosis unit 108, the stacker 109, and the finisher 110 via a communication cable 260. The CPU 206 performs communication for controlling these devices via the communication I/F 201. The network I/F 204 is connected to the external controller 102 via the internal LAN 105 and used for communication of control data and the like. The video I/F 205 is connected to the external controller 102 via the video cable 106 and used for communication of data such as image data. Note that the printing unit 107 (image forming apparatus 101) and the external controller 102 may also be connected with only the video cable 106 as long as operations of the image forming apparatus 101 can be controlled by the external controller 102. Various programs or data are stored in the HDD 208. The CPU 206 controls operations of the entire printing unit 107 by deploying the programs stored in the HDD 208 into the memory 207 and executing the programs. Programs and data that are necessary for the CPU 206 to perform various types of processing are stored in the memory 207. The memory 207 includes a RAM and a ROM, for example, and serves as a work area for the CPU 206. The UI display unit 225 is used to accept input of various settings and operation instructions from the user, and display various types of information such as settings information and processing conditions of a print job.

Next, the following describes the diagnosis unit 108 of the image forming apparatus 101.

The diagnosis unit 108 includes a communication I/F 211, a CPU 212, a memory 213, a HDD 214, the image reading devices 331 and 332, an inspection unit 216, an image diagnosis unit 217, and a UI display unit 215. These devices are connected to each other via a system bus 221 in a manner such that data can be transmitted and received therebetween. The communication I/F 211 is connected to the printing unit 107 via the communication cable 260. The CPU 212 performs communication necessary to control the diagnosis unit 108 via the communication I/F 211. The CPU 212 controls operations of the diagnosis unit 108 by deploying control programs stored in the inspection unit 216, the image diagnosis unit 217, and the HDD 214 into the memory 213 and executing the programs. A control program for the image reading devices 331 and 332 is stored in the HDD 214. Also, a control program for the inspection processing is stored in the inspection unit 216, and a control program for the image diagnosis processing is stored in the image diagnosis unit 217. Furthermore, the image diagnosis unit 217 includes a feature calculation module 218 that calculates features for identifying a factor of a malfunction of the image forming apparatus 101 from an image defect, a factor specifying module 219 that identifies the factor of the image defect based on the features, and a measure module 220 that executes corrective measures corresponding to the identified factor. Details of the inspection processing and the image diagnosis processing will be described later.

The image reading devices 331 and 332 read an image on a printed product conveyed to the image reading devices 331 and 332 in accordance with an instruction from the CPU 212. The CPU 212 determines whether or not the printed product includes an image defect with use of the program stored in the inspection unit 216 based on read image data of the printed product read by the image reading devices 331 and 332. If the read image data includes an image that satisfies a predetermined condition that is a condition for detecting an image defect (i.e., if the read image data includes an image defect), the CPU 212 makes a diagnosis by identifying the location of a malfunction in the image forming apparatus 101 that caused the image defect with use of the program stored in the image diagnosis unit 217. Note that the image reading devices 331 and 332 may also be provided separately from the diagnosis unit 108.

The UI display unit 215 is used to display a diagnosis result and a settings screen, for example. For example, it is possible to set the type of image defects to be detected in the inspection processing and a detection level indicating the lower limit of the size of an image defect to be detected. Furthermore, it is possible to set the number of sheets on which image defects are consecutively detected, as a condition for stopping the inspection and starting the image diagnosis processing. Note that the above-described examples of settings are merely examples and do not limit the present invention. A configuration is also possible in which factors to be detected in the image diagnosis processing can be set. A configuration is also possible in which a program for causing the CPU 212 to function as the inspection unit 216 and the image diagnosis unit 217 is stored in the HDD 214, and the CPU 212 functions as the inspection unit 216 and the image diagnosis unit 217 by deploying the program from the HDD 214 into the memory 213 and executing the program. An operation unit is configured to also serve as the UI display unit 215, is operated by the user, and accepts various instructions from the user.

The stacker 109 performs control to discharge a printed product that has been discharged from the diagnosis unit 108 and conveyed along the conveyance paths to the stacking tray 341 or the escape tray 346 or convey the printed product to the finisher 110 connected to the downstream side of the stacker 109 in the conveyance direction of the printed product.

The finisher 110 controls the conveyance and discharge of the printed product and performs finishing processing such as stapling, punching, or saddle-stitch binding on the printed product.

Next, the following describes the external controller 102.

The external controller 102 includes a CPU 251, a memory 252, a HDD 253, a keyboard 256, a display unit 254, network I/Fs 255 and 257, and a video I/F 258. These devices are connected to each other via a system bus 259 in a manner such that data can be transmitted and received therebetween. The CPU 251 receives print data from the client PC 103, executes raster image processing (RIP), and transmits the print data to the image forming apparatus 101, for example, by deploying a program stored in the HDD 253 into the memory 252 and executing the program. Thus, the CPU 251 controls operations of the entire external controller 102. Programs and data that are necessary for the CPU 251 to perform various types of processing are stored in the memory 252. The memory 252 includes a RAM and a ROM, and serves as a work area for the CPU 251. Various programs and data are stored in the HDD 253. The keyboard 256 is used to input operation instructions from the user to the external controller 102. The display unit 254 is a display, for example, and used to display information of an application that is being executed by the external controller 102 and an operation screen. The network I/F 255 is connected to the client PC 103 via the external LAN 104 and used for communication of data such as print instructions. The network I/F 257 is connected to the image forming apparatus 101 via the internal LAN 105 and used for communication of data such as print instructions. The external controller 102 is configured to be capable of communicating with the printing unit 107, the diagnosis unit 108, the stacker 109, and the finisher 110 via the internal LAN 105 and the communication cable 260. The video I/F 258 is connected to the image forming apparatus 101 via the video cable 106 and used for communication of data such as image data (print data).

Next, the following describes the client PC 103.

The client PC 103 includes a CPU 261, a memory 262, a HDD 263, a display unit 264, a keyboard 265, and a network I/F 266. These devices are connected to each other via a system bus 269 in a manner such that data can be transmitted and received therebetween. The CPU 261 controls operations of the devices via the system bus 269 by deploying a program stored in the HDD 263 into the memory 262 and executing the program. Thus, various types of processing are realized by the client PC 103. For example, the CPU 261 creates print data and gives a print instruction by deploying a document processing program stored in the HDD 263 into the memory 262 and executing the program. Programs and data that are necessary for the CPU 261 to perform various types of processing are stored in the memory 262. The memory 262 includes a RAM and a ROM, and serves as a work area for the CPU 261.

Various applications such as the document processing program, a program for the printer driver or the like, and various types of data are stored in the HDD 263. The display unit 264 is a display, for example, and used to display information of an application that is being executed by the client PC 103 and an operation screen. The keyboard 265 is used to input operation instructions from the user to the client PC 103. The network I/F 266 is connected to the external controller 102 via the external LAN 104 in a communication-enabling manner. The CPU 261 communicates with the external controller 102 via the network I/F 266.

Next, the following describes the inspection processing executed by the inspection unit 216 and the image diagnosis processing according to the first embodiment with reference to the drawings.

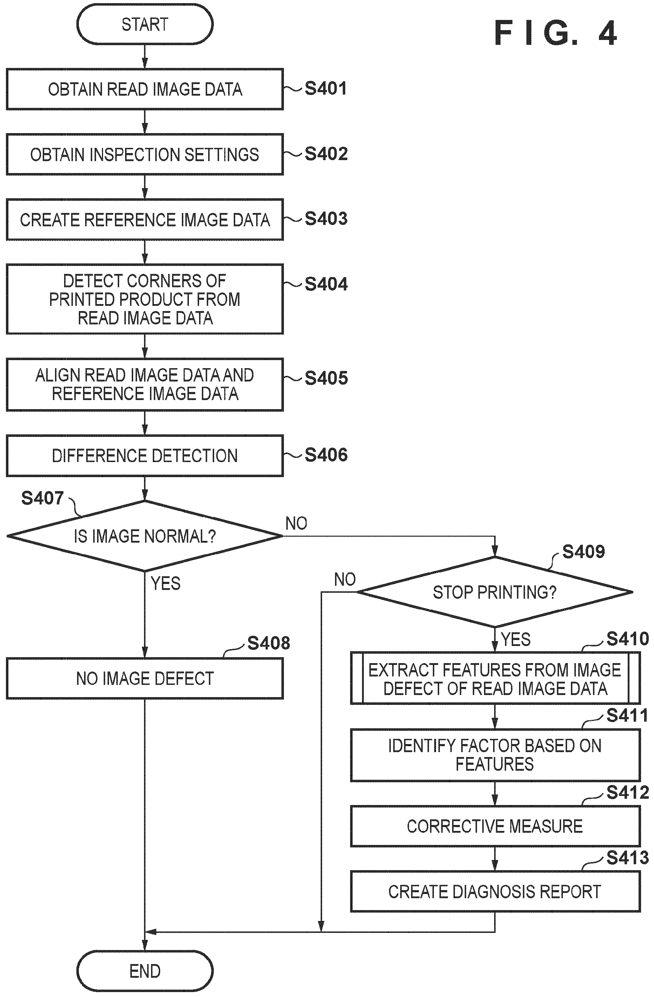

FIG. 4 is a flowchart for describing the image diagnosis processing performed by the diagnosis unit 108 according to the first embodiment. Note that FIG. 4 shows an entire flow from the start of reading of a printed product by the image reading devices 331 and 332 to the image diagnosis processing. Processing performed in each step shown in FIG. 4 is realized by the CPU 212 of the diagnosis unit 108 by executing a program deployed into the memory. Note that the image forming apparatus 101 according to the embodiment can inspect images on both surfaces of the printed product by using the image reading devices 331 and 332, but a case where an image is inspected with use of the image reading device 331 will be described here to make the description simple.

First, the following describes details of the inspection processing. The inspection processing is expressed as processing performed in steps S401 to S408, and the CPU 212 determines whether or not read image data includes an image defect in the inspection processing by deploying a program stored in the inspection unit 216 into the memory and executing the program.

First in step S401, the CPU 212 obtains read image data by reading a printed product with use of the image reading device 331 at a timing when the printed product conveyed along the conveyance path 330 reaches a predetermined position. The CPU 212 stores the read image data in the HDD 214 of the diagnosis unit 108 and the processing proceeds to step S402. In step S402, the CPU 212 obtains settings of the inspection processing stored in the HDD 214. In the first embodiment, the CPU 212 obtains the type of image defects to be detected in the inspection processing and a detection level for determining an image defect, stores the obtained settings of the inspection processing in the memory 213, and the processing proceeds to step S403.

In step S403, the CPU 212 obtains original image data stored in the HDD 208 of the printing unit 107 and used to print the printed product. At this time, the CPU 212 converts colors in the original image data by using a known color conversion matrix prepared in advance to obtain color signal values of the same level as colors in the read image data. The original image data subjected to the color conversion is stored as reference image data that does not include an image defect in the HDD 214, and then the processing proceeds to step S404. Note that a case where the reference image data is created by converting colors in the original image data is described, but the method for creating the reference image data is not limited to the exemplary method described above. For example, it is also possible to read a printed product obtained based on the original image data with use of the image reading device 331 and use the thus obtained read image data as the reference image data.

Next, the processing proceeds to step S404 and the CPU 212 detects pixel positions of sheet corners of the printed product from the read image data. There is no particular limitation on the method for detecting the sheet corners, but the sheet corners may be detected by, for example, extracting pixel regions similar to sheet corner images prepared in advance through template matching and calculating centroids of the pixel regions. It is sufficient to use a method with which the sheet corners can be detected, and it is also possible to take an intersection of edges forming an outermost angle extracted through Hough transform to be a sheet corner. After storing four pixel positions detected as the sheet corners as described above in the HDD 214 of the diagnosis unit 108, the processing proceeds to step S405.

In step S405, the CPU 212 performs alignment of the reference image data created in step S403 and the read image data with reference to the positions of the sheet corners and the same pattern included in the original image data. Here, the alignment is performed to increase the accuracy in detection of a difference, which will be described later. In the first embodiment, alignment processing is performed with use of rigid-body transformation. In the alignment processing, first, feature points that serve as reference points, such as the sheet corners and edges of the pattern are extracted from the reference image data and the read image data. Next, feature points representing the same constituent element are associated with each other, and an affine matrix that minimizes the sum of the Euclidean distance between the feature points is calculated. Lastly, affine transform is performed on the reference image data to make the positions of the feature points in the reference image data closer to the positions of the feature points in the read image data. After creating reference image data subjected to affine transform as described above, the CPU 212 stores the created reference image data in the HDD 214 and the processing proceeds to step S406. In the first embodiment, an example in which alignment processing is performed with use of rigid-body transformation is described, but there is no limitation to this example. It is also possible to use non-rigid-body transformation such as known free-form deformation (FFD), thin plate spline (TPS), or landmark LDDMM to perform alignment giving consideration to a local distortion in the read image data that occurs due to uneven conveyance speed of the printed product, for example.

Then, in step S406, the CPU 212 creates a difference image by determining differences between the brightness of pixels of the reference image data and the brightness of pixels of the read image data, and creates a binary image indicating the presence or absence of an image defect by comparing each difference value of the difference image with a threshold. Here, each image data is initially converted to brightness value data, and differences between brightness values are calculated. An RGB signal value is converted to a brightness value Y with use of the following formula (1) defined in ITU-T BT.709. $Y = 0.2126 \times R + 0.7152 \times G + 0.0722 \times B$ Formula (1)

Difference image data Ydiv is calculated with use of the following formula (2) where Yref represents the reference image data and Yins represents the read image data. $Ydiv = Yref - Yins$ Formula (2)

At this time, the difference image data Ydiv is held as data that has both a positive value and a negative value. If the difference image data Ydiv has a positive value, the printed image is darker than the reference image, and accordingly, the positive value indicates an image defect that has a density higher than an expected density. Next, filtering processing for emphasizing specific shapes is applied to the difference image data.

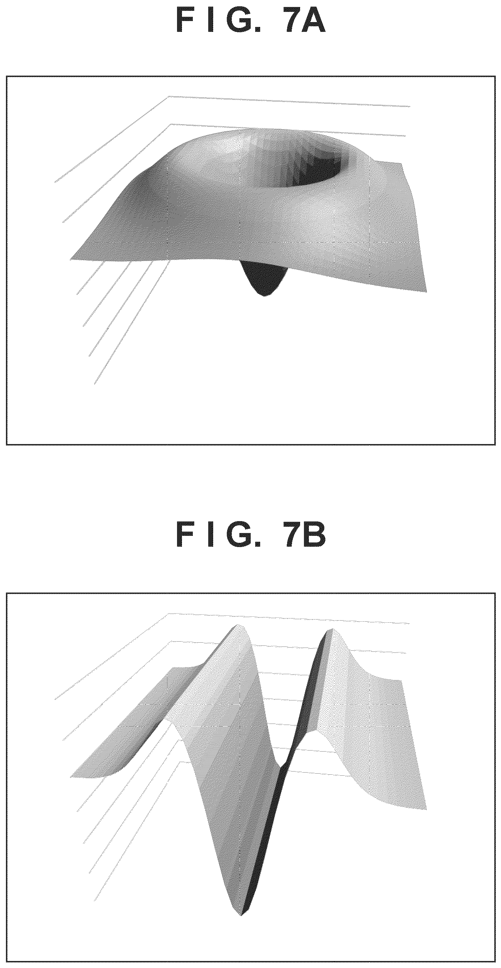

FIGS. 7A and 7B depict views for respectively describing the filtering processing for emphasizing specific shapes.

For example, FIG. 7A shows characteristics of a filter for emphasizing a dot-like image defect, and FIG. 7B shows characteristics of a filter for emphasizing a linear defect. Which of the filters is to be used is determined according to the type of image defects included in the inspection settings obtained in step S402. For example, when dot-like defects are set as image defects to be detected, filtering processing is executed with use of the filter shown in FIG. 7A. On the other hand, when linear defects are set as image defects to be detected, filtering processing is executed with use of the filter shown in FIG. 7B. Furthermore, the CPU 212 executes binarization processing on the filtered difference image based on a threshold corresponding to the inspection level obtained in step S402. In the binarization processing, an image is created by converting pixel values of pixels larger than the threshold to "1" and converting pixel values of pixels equal to or smaller than the threshold to "0". After creating binary image data as described above, the CPU 212 stores the binary image data in the HDD 214 and the processing proceeds to step S407.

In step S407, the CPU 212 determines whether or not the binary image includes a pixel exceeding the threshold, i.e., a pixel (image defect) whose pixel value is "1". If it is determined in step S407 that there is no pixel exceeding the threshold, i.e., there is no image defect, the processing proceeds to step S408 and the CPU 212 terminates the inspection processing determining that the printed product does not include an image defect. On the other hand, if it is determined in step S407 that there is a pixel exceeding the threshold, the processing proceeds to step S409 and the CPU 212 starts the image diagnosis processing.

Next, the following describes details of the image diagnosis processing. The image diagnosis processing is expressed as processing performed in steps S409 to S413. Here, the CPU 212 functions as the feature calculation module 218, the factor specifying module 219, and the measure module 220 by executing programs stored in these modules. Thus, the CPU 212 identifies locations of malfunctions in the image forming apparatus 101 and the image reading devices 331 and 332, and executes corrective measures when there is a malfunction.

In step S409, the CPU 212 obtains inspection results of read image data regarding printed products that have already been conveyed and for which determination has already been made in the inspection processing from the HDD 214 in which the inspection results are stored, and determines whether or not to stop printing processing giving consideration to the determined inspection results. At this time, the CPU 212 obtains the number of printed products in which image defects were consecutively detected, based on the obtained inspection results, for example. Then, the CPU 212 determines whether or not the number of printed products in which image defects were consecutively detected is larger than a threshold by referring to the threshold of the number of consecutive sheets on which image defects are detected, which threshold being included in the settings obtained in step S402. If the number of printed products in which image defects were consecutively detected is not larger than the threshold, the CPU 212 determines that the possibility of a malfunction occurring in the image forming apparatus 101 or the image reading device 331 is low, and ends the image diagnosis processing.

Conversely, if it is determined that the number of printed products in which image defects were consecutively detected is larger than the threshold, the CPU 212 stops the printing processing performed by the image forming apparatus 101 and the processing proceeds to step S410. Specifically, the CPU 212 gives an instruction to suspend the creation of a printed product to the printing unit 107. Upon receiving the instruction to suspend the creation of a printed product, the CPU 206 of the printing unit 107 performs control to stop the printing unit 107 and suspend the creation of a printed product. As a result of the creation of a printed product being stopped, processing from the creation of a printed product to the inspection is stopped.

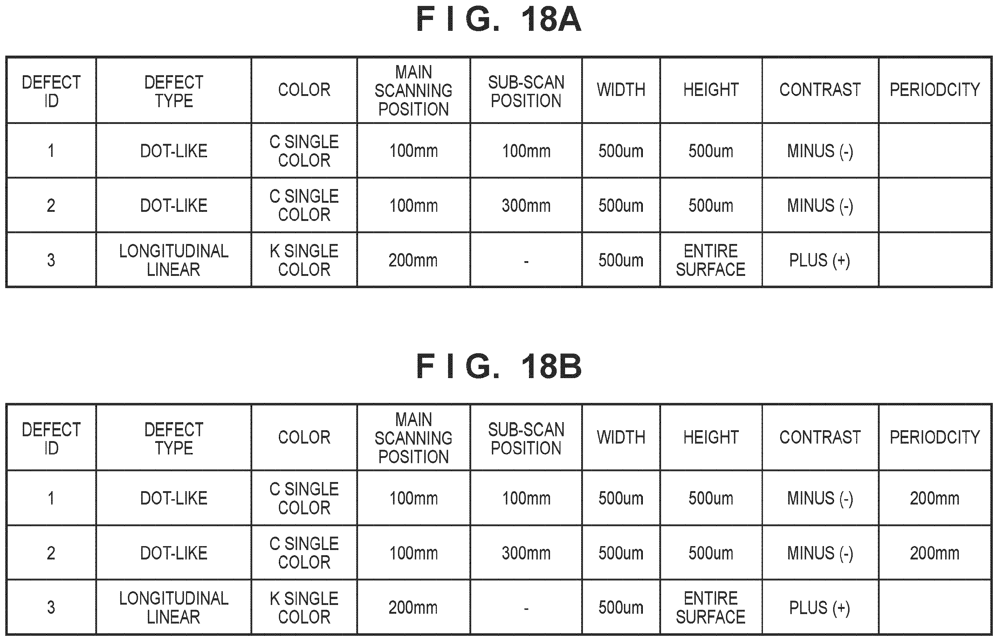

Then, in step S410, the CPU 212 calculates features for each image defect from the read image data and creates feature table data. Features in the first embodiment are features of image defects, and examples of the features include color information of an image defect region. The color information is calculated as color information indicating whether the image defect region has a single color such as yellow, magenta, cyan, or black, or a multi-order color obtained with use of two or more of these colors from a combination of coloring materials included in the image forming apparatus 101. The features also include contrast information indicating the color density of the image defect region. There are two types of contrast information, one of which indicating that the density is lower than expected density because the coloring materials were not appropriately applied to the sheet, resulting in white spotting, and the other type of contrast information indicating that the density is higher than the expected density because the coloring materials were excessively applied to the sheet. Furthermore, the features include shape information indicating the size of the image defect, coordinate information indicating a position in a direction perpendicular to the conveyance direction of the sheet in the printing unit 107, and cycle information indicating cyclic occurrence of image defects having similar features on a plurality of consecutive pages. Note that the above-described features are merely examples and do not limit the present invention. In short, it is sufficient to adopt features necessary to identify factors for which it is necessary to make repairs or take measures (repair measures), based on the result of the image diagnosis processing. For example, in order to identify a factor that is characterized in uneven color density of the image defect, it is possible to add uniformity of the color density of the image defect as the contrast information. Also, in order to identify a factor that causes an image defect elongated in the conveyance direction of the sheet, it is possible to add an aspect ratio between the size of the image defect in the conveyance direction and the size of the image defect in the sheet width direction as the shape information. As described above, in step S410, the CPU 212 calculates the above-described features of each image defect detected in the determination performed in step S407, and creates feature table data like that shown in FIG. 18A, for example.

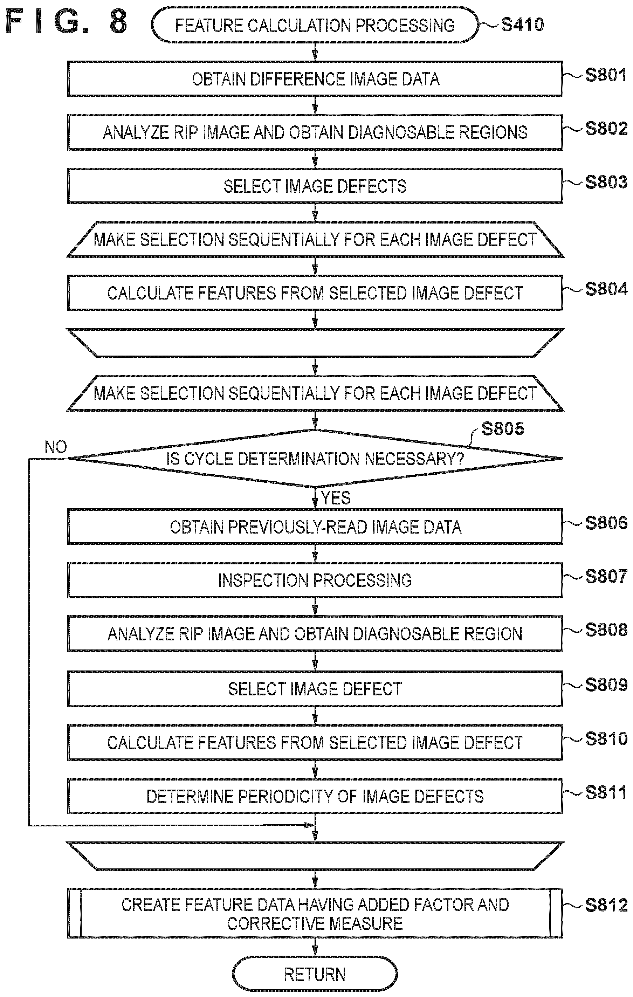

FIG. 8 is a flowchart for describing processing for calculating the features and creating the feature table data in step S410 shown in FIG. 4. The processing shown in this flowchart is realized by the CPU 212 of the diagnosis unit 108 by executing processing based on a program stored in the feature calculation module 218.

In step S801, the CPU 212 obtains the difference image data calculated in step S406 from the HDD 214, stores the difference image data in the memory 213, and the processing proceeds to step S802. In step S802, the CPU 212 obtains input image data corresponding to the printed product and stored in the HDD 208 of the printing unit 107, and calculates diagnosable regions based on the input image data. The diagnosable regions in the first embodiment are two-dimensional image data indicating regions where image defects can be detected correctly. When the inspection processing according to the embodiment is performed, it may not be possible to correctly detect only image defects, and a region that is not an image defect may be incorrectly detected as an image defect. Therefore, diagnosable regions are prepared by excluding regions in which the calculation accuracy of features is low based on the input image data. In the first embodiment, two types of diagnosable regions are prepared according to the color density of image defects. Specifically, the amount of coloring materials is calculated for each region of the image based on the input image data, and high-density regions in which the amount of coloring materials is equal to or larger than a certain amount are determined as regions in which it is possible to diagnose image defects having a lower color density than the expected density. Also, low-density regions in which the amount of coloring materials is equal to or smaller than the certain amount are determined as regions in which it is possible to diagnose image defects having a higher color density than the expected density.

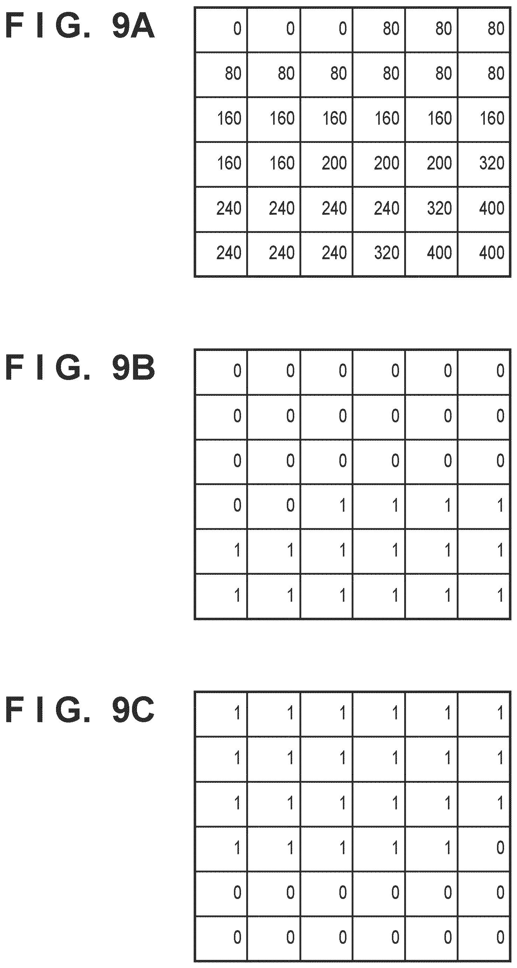

FIGS. 9A to 9C are schematic diagrams respectively showing diagnosable regions that are used to calculate features in the image diagnosis processing according to the first embodiment.

FIG. 9A shows an example of data obtained by calculating the amount of coloring materials for each region of an image. The sum of amounts of respective coloring materials, which are held as the input image data, is used as the amount of coloring materials. The image forming apparatus 101 according to the first embodiment is loaded with four coloring materials and accepts an input value from 0 to 100 for each coloring material. Accordingly, the maximum value of the amount of coloring materials for a pixel is 400. FIG. 9A shows an example of a gradation image in which the density increases from the upper left to the lower right.

FIG. 9B shows a schematic diagram showing regions in which it is possible to diagnose image defects having a lower color density than the expected density, and FIG. 9C is a schematic diagram showing regions in which it is possible to diagnose image defects having a higher color density than the expected density. In FIGS. 9B and 9C, "0" indicates that the image defects cannot be diagnosed and "1" indicates that the image defects can be diagnosed. In FIG. 9B, regions having a medium density (amount of coloring materials=200) or a higher density are determined as diagnosable regions in order to diagnose image defects having a lower color density than the expected density. On the other hand, in FIG. 9C, regions having the medium density (amount of coloring materials=200) or a lower density are determined as diagnosable regions in order to diagnose image defects having a higher color density than the expected density. After calculating diagnosable regions as described above and storing the diagnosable regions in the memory 213, the processing proceeds to step S803.

In step S803, the CPU 212 compares the difference image data obtained in step S801 with the diagnosable regions obtained in step S802, selects image defects in the diagnosable regions, and further selects image defects from the selected image defects to further increase the calculation accuracy of features. That is to say, if the diagnosable regions shown in FIG. 9B include an image defect having a lower color density than the expected density, which is indicated by a negative value of the difference image data, the printing result is left as an effective image defect. Also, if the diagnosable regions shown in FIG. 9C include an image defect having a higher color density than the expected density, which is indicated by a positive value of the difference image data, the printing result is left as an effective image defect. After selecting image defects as described above, the processing proceeds to step S804.

Processing for calculating features in step S804 is performed for each image defect selected in step S803, and repeated until the features are calculated for all of the image defects. The features include five types of features: a defect type, the color, and coordinate information of the image defect, shape information indicating the size of the image defect, contrast information indicating the color density of the image defect, and cycle information. In step S804, features that can be calculated from the selected image defect alone, i.e., the features other than the cycle information are calculated. Here, the features are calculated based on the read image data, the reference image data, the difference data calculated in step S406, and the binary image obtained in step S407 and indicating the presence or absence of an image defect.

For example, if an image defect was detected in a binary image obtained by applying the filter for dot-like defects shown in FIG. 7A and performing binarization, the defect type included in the features is determined to be dot-like defect. The color of an image defect region is determined by converting average RGB values of the image defect region in the read image data to CMYK based on a color conversion table, and determining a combination of CMYK exceeding a threshold after the conversion. If only C (cyan) exceeds the threshold, the color of the image defect region is determined to be cyan alone, and if two colors, i.e., C (cyan) and M (magenta) exceed the threshold, the color of the image defect region is determined to be a mixture of cyan and magenta. The color conversion table is prepared by measuring the color of a printed product printed by the printed unit 107 in advance. It is more preferable to prepare the color conversion table for each type of printing material. The coordinate information is obtained by calculating coordinates of the centroid of the image defect based on the difference image with reference to the left end of the leading edge of the printed product in the conveyance direction. Likewise, the shape information is calculated based on the difference image taking the maximum size of the image defect in the conveyance direction to be the height and taking the maximum size of the image defect in the sheet width direction to be the width. The contrast information is determined based on whether the image defect region in the difference data has a positive signal value or a negative signal value. If the difference data has a positive signal value, the contrast is determined to be "plus (+)", and if the difference data has a negative signal value, the contrast is determined to be "minus (-)". FIG. 18A shows an example of the calculation result of the features other than the cycle information in a case where there are three types of image defects.

In FIG. 18A, the defect ID is identification information for identifying the image defect. It can be found that two of the three types of image defects are dot-like defects, one is a longitudinal linear defect, and the longitudinal linear image defect extends across the entire region of the read image data.

As described above, the features other than periodicity of each image defect are calculated and recorded in step S804. In step S804, the CPU 212 selects an image defect of which the features have not been calculated, and calculates the features. After calculating the features of each image defect selected in step S803 and storing the features in the memory 213, the processing proceeds to step S805.

Similarly to step S804, processing in steps S805 to S811 is repeated until determination on the periodicity is made for all of the selected image defects. In step S805, the CPU 212 determines whether or not it is necessary to make determination on the periodicity. Specifically, the CPU 212 determines whether or not the image defect is of a type that occurs cyclically in the conveyance direction. As described above, the image forming apparatus 101 is configured to form an image from an upper end portion of a sheet by rotating components that extend across the width of the sheet. Accordingly, if there is a malfunction in the image forming apparatus, a dot-like defect or a linear defect (transverse line) that is perpendicular to the conveyance direction occurs cyclically, but a linear defect (longitudinal line) that is parallel to the conveyance direction does not occur cyclically. From this viewpoint, the CPU 212 determines whether or not the defect type of the selected image defect is dot-like defect or transverse line, and if the defect type is dot-like defect or transverse line, performs processing in step S806 and the following steps. Otherwise, the CPU 212 selects the next image defect and the processing proceeds to step S805.

In step S806, the CPU 212 obtains previously-read image data that was read earlier than the read image data obtained in step S401 by searching the HDD 214. The CPU 212 checks image defects included in the previously-read image data, and determines whether or not the selected image defect has occurred cyclically in the conveyance direction. Here, all read image data in which image defects were consecutively detected in step S406 are obtained as the previously-read image data. After obtaining the previously-read image data and storing the data in the memory 213, the processing proceeds to step S807. In the first embodiment, an example in which whether or not to make determination on the periodicity is determined according to the defect type is described, but the determination criterion is not limited to this example. For example, whether or not to make the determination on the periodicity may also be determined by comparing the sheet size of the printed product and cycles that are to be identified. Specifically, if a sheet may include two or more cycles due to three image defects, it is possible to make the determination on the periodicity based on read image data of a single sheet. In this case, if the defect type is linear defect (longitudinal line) parallel to the conveyance direction or at least three image defects do not appear at substantially the same main scanning position in the read image data of a single sheet, it is determined to make the determination on the periodicity based on read image data of a plurality of sheets.

In step S807, the CPU 212 performs inspection processing on the previously-read image data obtained in step S806. This inspection processing is the same as the processing described as steps S402 to S406, and therefore, descriptions thereof are omitted.

In steps S808 to S810, the CPU 212 executes processing for selecting image defects from the previously-read image data and calculating the features. This processing is the same as the processing described as steps S802 to S804, and therefore, descriptions thereof are omitted. After calculating the features of the image defects from the previously-read image data in step S810 and storing the features in the memory 213, the processing proceeds to step S811.

In step S811, the CPU 212 compares the features of the selected image defect and the features of the other image defects and determines whether or not the selected image defect appears at substantially the same main scanning position and has periodicity in the conveyance direction. The CPU 212 refers to periodicity (information of a distance in the conveyance direction) corresponding to each component of the image forming apparatus 101, which is held in the HDD 214 in advance, and determines whether or not the image defect has periodicity based on whether or not there is a combination of image defects that appear at main scanning positions close to each other and match the periodicity described above. Here, if it is determined that the selected image defect has periodicity, the distance in the conveyance direction is added as the periodicity of the selected image defect and stored in the memory 213. FIG. 18B schematically shows an example of feature data when the processing in step S811 is complete. After storing feature data of all image defects in the memory 213 as described above, the processing proceeds to step S812.

FIG. 18B shows feature data obtained by adding information of the periodicity to the feature data shown in FIG. 18A.

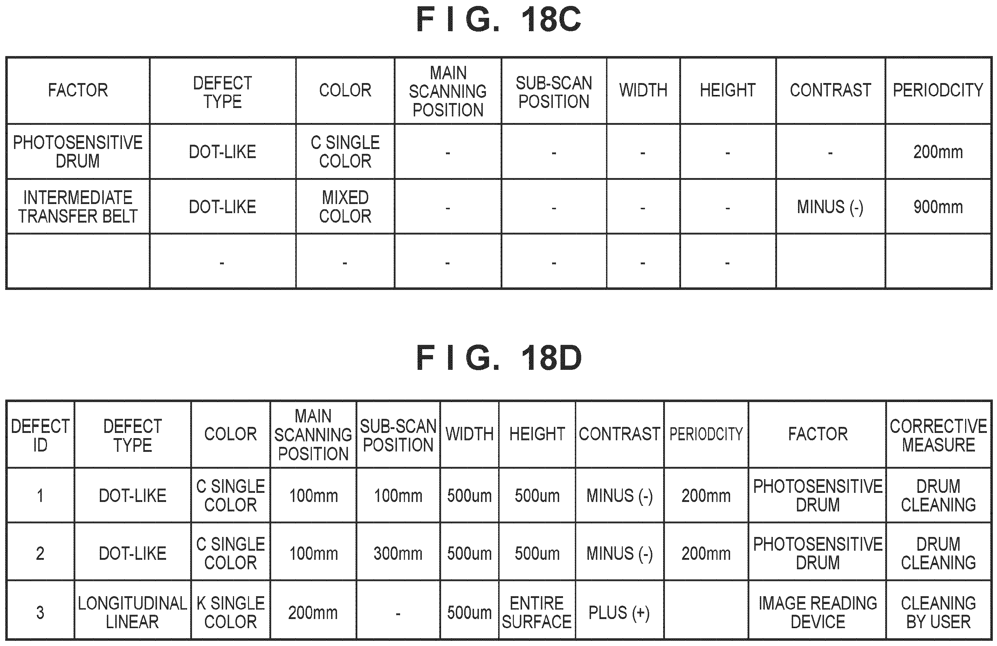

In step S812, the CPU 212 stores the feature data calculated for each image defect as feature table data in the HDD 214. Furthermore, the CPU 212 compares the feature table data with factor identification table data (FIG. 18C) prepared in advance with respect to each image defect, and identifies a factor corresponding to the image defect. The CPU 212 selects a repair or a method for taking measures according to the identified factor, and creates correspondence table data (FIG. 18D) by adding the factor and measures to the feature table data.

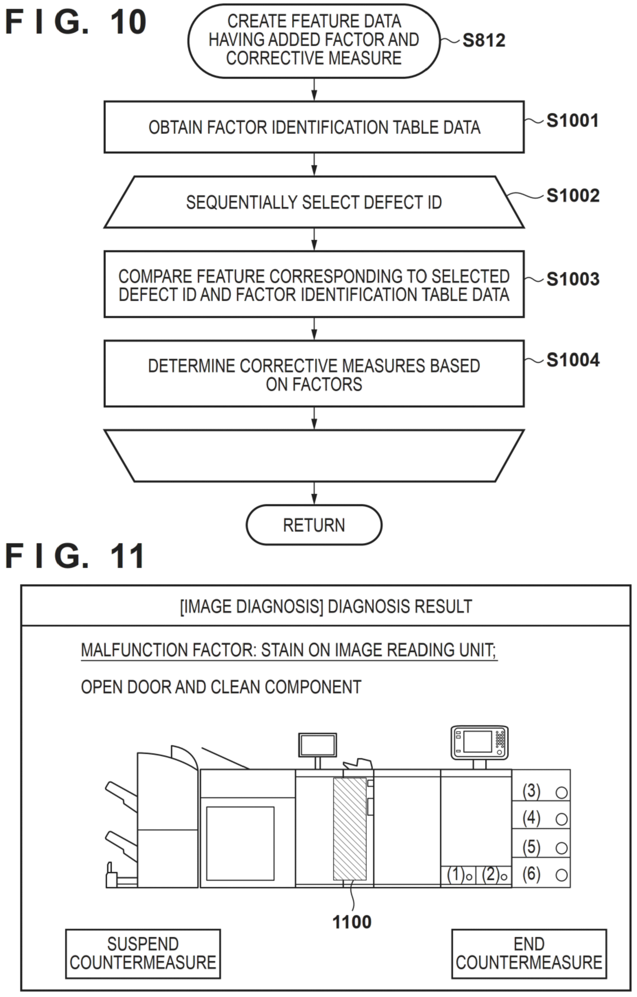

FIG. 10 is a flowchart for describing processing for creating feature table data by adding the factor and corrective measures in step S812 shown in FIG. 8.

In step S1001, the CPU 212 obtains the factor identification table data stored in the HDD 214. FIG. 18C shows an example of the factor identification table data. The factor identification table data indicates combinations of the features calculated in step S410 and factors. Features of image defects corresponding to respective factors of malfunctions are held in the table. Whether or not an image defect satisfies conditions shown in the table is not determined with respect to features for which "-" is shown in FIG. 18C. It can be found from FIG. 18C that an image defect caused by a factor relating to a photosensitive drum occurs with a cycle of 200 mm in the conveyance direction of the sheet, and an image defect caused by a factor relating to the intermediate transfer belt occurs with a cycle of 900 mm in the conveyance direction of the sheet. After obtaining the factor identification table data as described above, the processing proceeds to step S1002.

In step S1002, the CPU 212 selects image defects one by one in the ascending order of defect ID from the feature table data (FIG. 18B) created in step S811, and executes the processing in steps S1003 and S1004. After finishing the processing up to step S1004, the CPU 212 selects an image defect for which measures have not been determined, and then executes the processing in steps S1003 and S1004. Thus, the processing in steps S1003 and S1004 is repeated until repairs and methods for taking measures are determined for all the image defects.

In step S1003, the CPU 212 determines whether or not the factor identification table data (FIG. 18C) obtained in step S1001 includes a factor for which all features match the features of the image defect selected in step S1002. If there is a factor for which all features match, the factor is determined to be a factor corresponding to the selected image defect. If all features shown in the factor identification table data were not defected from the image defect, a factor corresponding to all of the defected features is determined to be a factor corresponding to the image defect. After determining factors corresponding to all of the detected image defects, the processing proceeds to step S1004.

In step S1004, the CPU 212 determines repairs or corrective measures (methods for making repairs or taking measures) corresponding to the factors. Corrective measures in the first embodiment are classified into corrective measures that can be performed by an adjustment function of the image forming apparatus 101 and automatically restore the image forming apparatus and corrective measures that cannot automatically restore the image forming apparatus. Examples of the corrective measures that can automatically restore the image forming apparatus include corrective measures that can be performed by the printing unit 107 to automatically restore the image forming apparatus, such as cleaning of a wire or grid in a corona charger used to charge a photosensitive drum included in the print engine 203 of the printing unit 107.

Examples of the corrective measures that cannot automatically restore the image forming apparatus include corrective measures that need to be performed by the user, such as cleaning of a reading surface of the image reading device for removing a stain, and corrective measures that need to be performed by a serviceman, such as replacement of a component. Examples of the corrective measures that can automatically restore the image forming apparatus also include corrective measures for dealing with fiber, foreign matter, etc., contained in a printing material before an image is formed thereon.

The CPU 212 selects corrective measures for respective factors based on a table (not shown) showing correspondence between factors and corrective measures, which is held in the HDD 214 in advance. Thus, the CPU 212 selects corrective measures for the respective image defects, and lastly creates correspondence table data showing combinations of the features and factors of the image defects and the corrective measures, and stores the correspondence table data in the HDD 214. FIG. 18D shows an example of the thus obtained feature table data. The factors identified in step S1003 and the corrective measures selected in step S1004 are added to the feature table data, and the feature table data is stored in the HDD 214. After storing the feature table data as described above, the processing proceeds to step S411. In step S411, the CPU 212 identifies a factor of the image defect based on the features of the image defect by referring to the feature table data, and then the processing proceeds to step S412.

In step S412, the CPU 212 executes a corrective measure for repairing the malfunction based on a component that is the factor identified in step S411. The CPU 212 determines whether or not the corrective measure corresponding to the factor of the image defect identified in step S411 can automatically restore the image forming apparatus. Upon determining that the corrective measure can automatically restore the image forming apparatus, the CPU 212 executes automatic restore control corresponding to the factor of the malfunction. On the other hand, upon determining that the corrective measure corresponding to the factor of the image defect cannot automatically restore the image forming apparatus, the CPU 212 displays an image diagnosis result and the corresponding measure on the UI display unit 215.

FIG. 11 depicts a view showing an example of UI display of a case where there is a stain on the reading surface of the image reading device and the user is requested to clean the reading surface in the first embodiment.

As shown in FIG. 11, display 1100 showing information of the identified factor of the malfunction "stain on the image reading unit", the corresponding measure, and a corresponding location in the image forming apparatus 101 is displayed to prompt the user to take the corrective measure. The corrective measure is executed for each identified factor, and after the measures corresponding to all factors are complete, the processing proceeds to step S413.

In step S413, the CPU 212 creates a PDF file as a diagnosis report including the content of the image diagnosis processing, and stores the diagnosis report in the HDD 214.

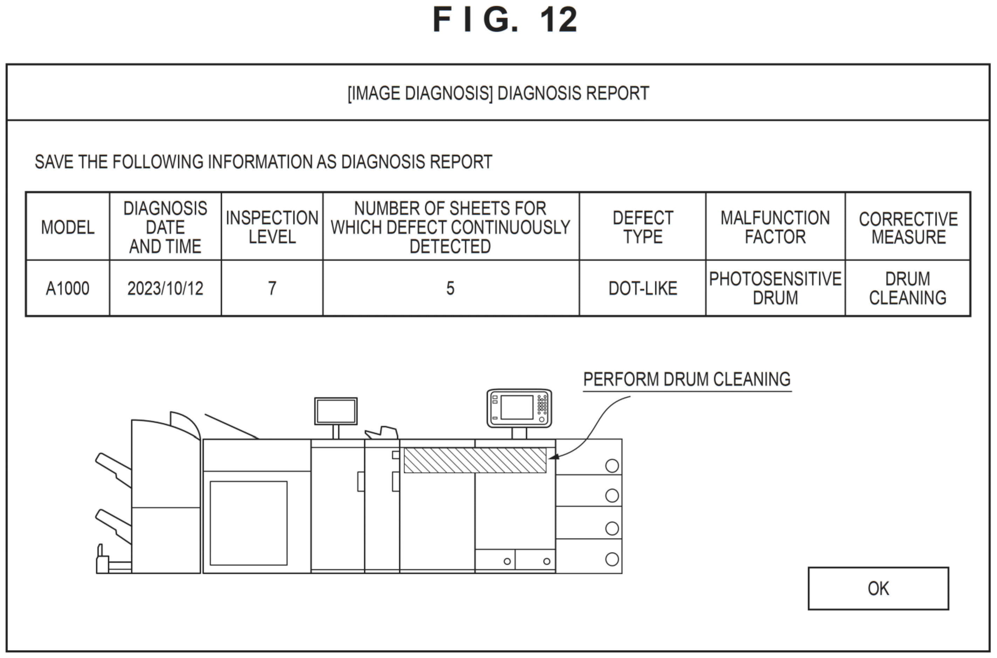

FIG. 12 depicts a view showing an example of the diagnosis report according to the first embodiment.

The diagnosis report shows information in which the model name of the image forming apparatus 101, diagnosis date and time, inspection settings (inspection level), the type of image defects detected from printed products, a factor of the malfunction, and a corrective measure based on the factor of the malfunction are associated with each other. Note that the above-described content of the diagnosis report is an example, and there is no limitation to this example. For example, read image data used to identify the factor of the malfunction may also be stored as a part of the report.

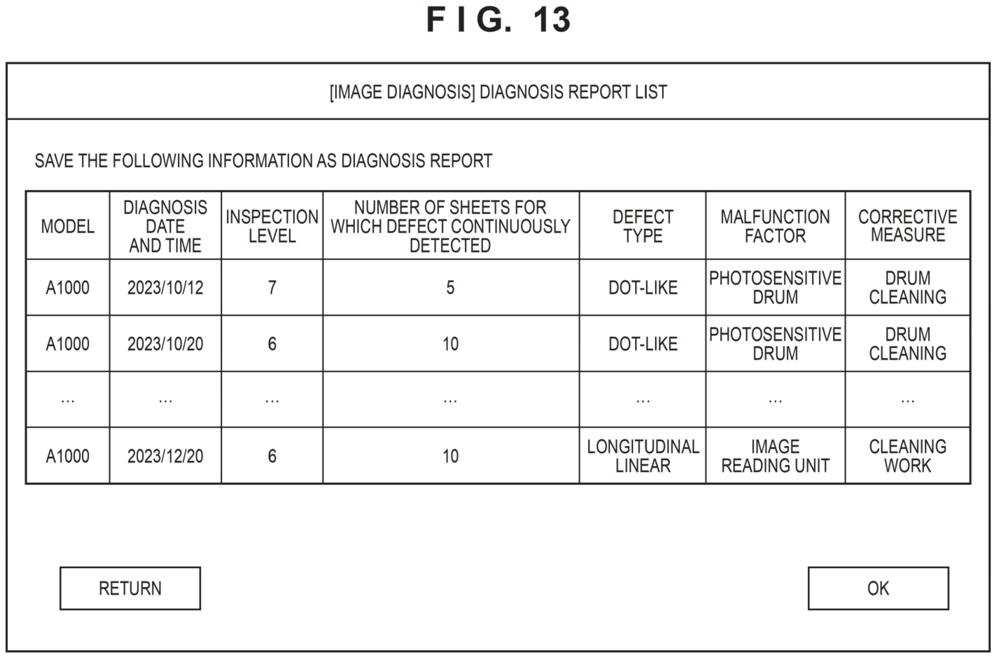

FIG. 13 is a diagram showing an example of a diagnosis report list according to the first embodiment.

It is desirable to display a list of reports of diagnosis that has been made as shown in FIG. 13 in response to an instruction from the user so that the user can check the list of diagnosis results. Note that the form of the report is not limited to the above-described example. It is desirable to store more detailed information regarding the main unit of the image forming apparatus as a report for a serviceman who replaces components.

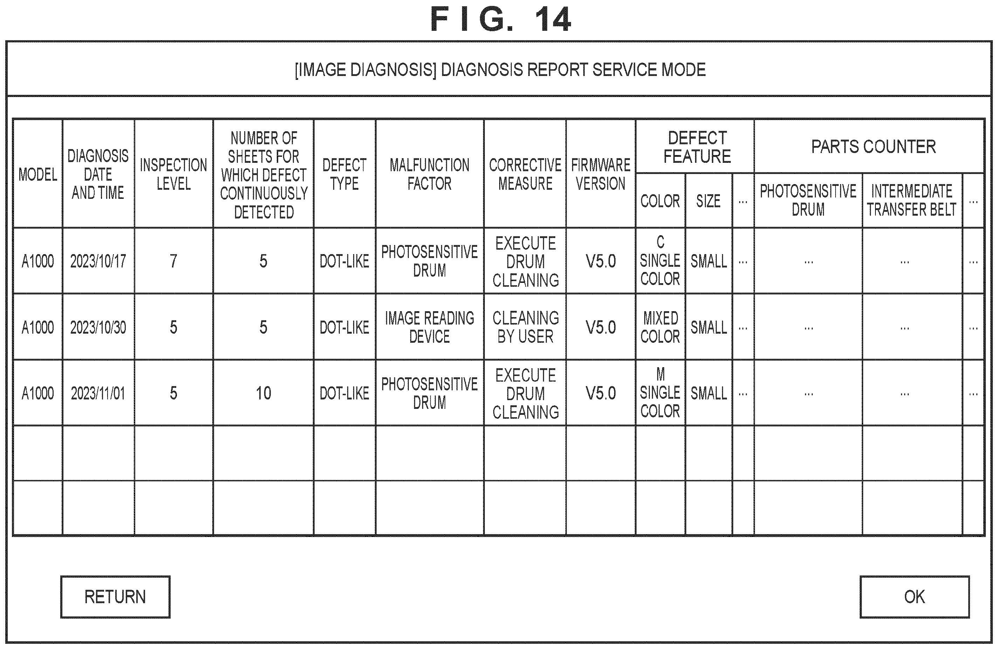

FIG. 14 is a diagram showing an example of a diagnosis report list to which a service mode is added according to the first embodiment.

As shown in FIG. 14, the version of firmware of the main unit of the image forming apparatus 101, the features of the image defects calculated in step S410, and counter information of each component may also be stored.

As described above, according to the first embodiment, when an image defect is detected and a predetermined condition is satisfied with previous inspection results taken into account, the image diagnosis processing for identifying factors of malfunctions in the image forming apparatus and the image reading device is carried out based on read image data of a printed product in which the image defect is detected. Since features of the image defect are obtained from the read image data that has already been read by the image reading device, it is possible to reduce downtime until the creation of a printed product is resumed and to suppress a reduction in the productivity, when compared with a case where a test chart is used.

### Variation of First Embodiment

In the first embodiment, an example is described in which the number of sheets of printing medium (paper) in which image defects are consecutively detected is used as a condition for starting the image diagnosis processing, but there is no limitation to this example. For example, the image diagnosis processing may be started in response to detection of an image defect based on which it is possible to determine that a malfunction has occurred in the image forming apparatus 101 and the image reading device. For example, when an image defect having a size or a shape from which it is possible to identify a factor of the malfunction, the image diagnosis processing may be performed even if the number of sheets of printing medium (paper) in which image defects are detected is one. Likewise, the image diagnosis processing may be performed when a sheet includes a plurality of image defects with a short cycle or many image defects appear at substantially the same main scanning position.

### Second Embodiment

Next, the following describes image diagnosis processing according to a second embodiment of the present invention. In the first embodiment described above, an example is described in which the image diagnosis processing for identifying factors of malfunctions in the image forming apparatus and the image reading device is executed based on read image data of a printed product in which an image defect was detected, after the image defect detected in the printed product has satisfied a predetermined condition.

In contrast, in an example described in the second embodiment, whether or not to execute image diagnosis processing is determined based on read image data of a printed product printed after printing was resumed in a re-diagnosis mode for checking whether or not a corrective measure was appropriately executed after a factor of an image defect was identified through image diagnosis processing, for example. The system configuration according to the second embodiment, the hardware configuration shown in FIG. 2, and the like are the same as those in the first embodiment, and therefore, descriptions thereof are omitted.

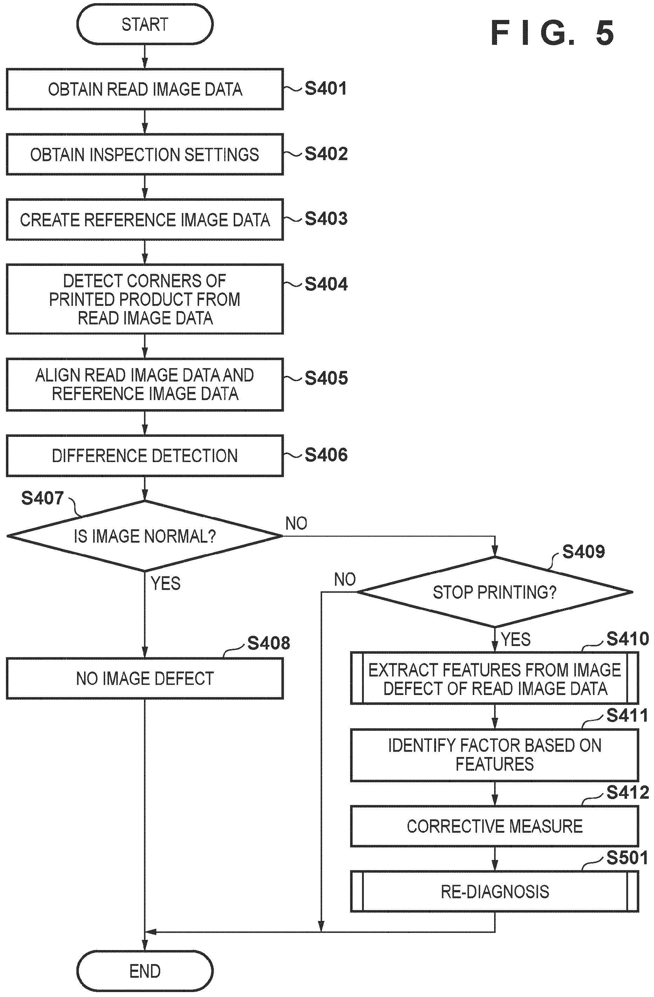

FIG. 5 is a flowchart for describing image diagnosis processing performed by the diagnosis unit 108 according to the second embodiment. Note that processing common to FIG. 4 described above and in FIG. 5 is denoted with the same reference numbers as those used in FIG. 4, and descriptions thereof are omitted. Processing performed in each step shown in FIG. 5 is realized by the CPU 212 of the diagnosis unit 108 by executing a program deployed into the memory. The image diagnosis processing shown in FIG. 5 differs from that shown in FIG. 4 in that step S501 is performed next to step S412.

In step S501, the CPU 212 checks whether or not the image defect was solved as a result of the corrective measure being appropriately executed in step S412. Specifically, the CPU 212 cancels the suspended state for inspection to resume printing without using a test chart. Then, the CPU 212 checks effects of the corrective measure with use of read image data of a printed product obtained by resuming printing. As described above, the read image data of the printed product printed after printing was resumed is used for re-diagnosis, and accordingly, the downtime can be further reduced. The following describes details of re-diagnosis processing.

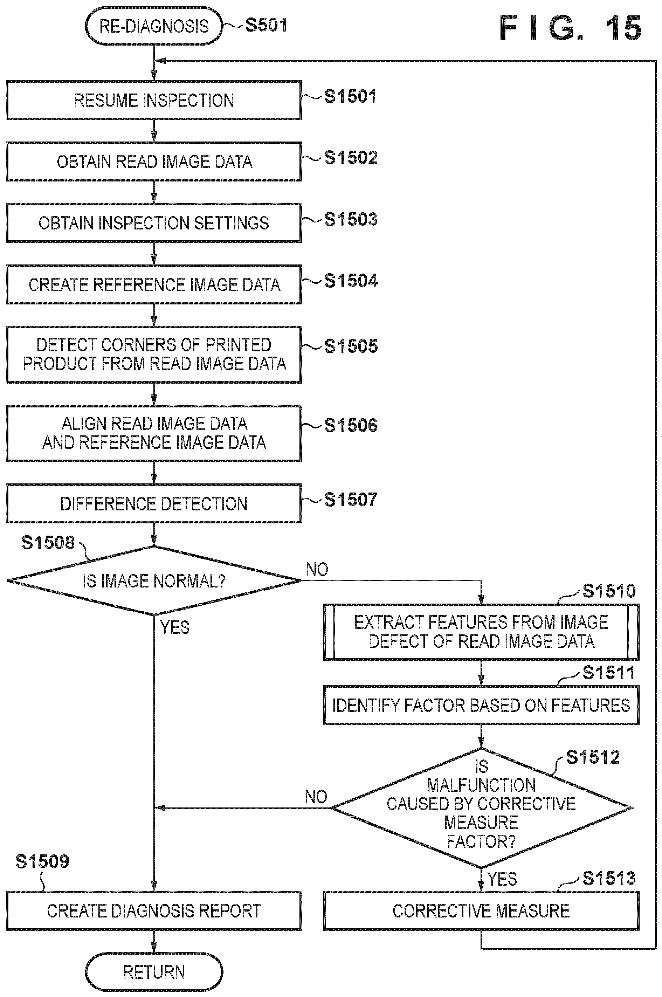

FIG. 15 is a flowchart for describing the re-diagnosis processing in step S501 shown in FIG. 5 according to the second embodiment. Note that the configuration of the printing system, the flow of the image diagnosis processing, and the like according to the second embodiment are the same as those in the first embodiment, and therefore, descriptions thereof are omitted. The following only describes the re-diagnosis processing that is executed in addition to the processing performed in the first embodiment. Processing performed in each step shown in FIG. 15 is realized by the CPU 212 of the diagnosis unit 108 as in the first embodiment.

In step S1501, the CPU 212 cancels suspension of the printing processing performed in step S409 and resumes the creation of a printed product based on an instruction from the user and the inspection processing. After the creation of the printed product is resumed and the printed product has reached the position where the image reading device 331 can read the printed product, the processing proceeds to step S1502 for obtaining read image data. Processing performed in steps S1502 to S1507 is the same as the inspection processing in steps S401 to S406 shown in FIG. 4 according to the first embodiment described above, and therefore, descriptions thereof are omitted.

Upon determining in step S1508 that the printed product does not include an image defect, the processing proceeds to step S1509, and upon determining in step S1508 that the printed product includes an image defect, the processing proceeds to step S1510. In step S1509, the CPU 212 determines that the corrective measure was appropriately executed in step S412 because the printed product printed after the corrective measure was executed in step S412 does not include an image defect. Then, the CPU 212 creates a diagnosis report through the same processing as that performed in step S413, and ends the re-diagnosis processing.

If an image defect is detected in the printed product after printing was resumed after the diagnosis processing performed to repair a factor of an image defect, the processing proceeds to step S1510. In step S1510, the CPU 212 calculates features from the image defect in the same manner as in step S410 in the first embodiment. After storing the calculated features in the HDD 214, the processing proceeds to step S1511. In step S1511, the CPU 212 identifies a factor of the image defect from the features by performing the same processing as that performed in the first embodiment, and stores the factor in the HDD 214. After storing the factor in the HDD 214, the processing proceeds to step S1512.

In step S1512, the CPU 212 obtains the factor identified in step S1511 and stored in the HDD 214, and determines whether or not the image defect matches an image defect caused by the factor. Thus, the CPU 212 determines whether or not the image defect occurred again as a result of a failure of the corrective measure. If the image defect occurred again due to the same factor, the processing proceeds to step S1513, the CPU 212 executes the corrective measure again, and then the processing returns to step S1501. On the other hand, if it is determined in step S1512 that the image defect did not occur again due to the same factor, the CPU 212 determines that the corrective measure was appropriately performed in step S412, the processing proceeds to step S1509, the CPU 212 creates a diagnosis report, and ends the re-diagnosis processing.

As described above, according to the second embodiment, the re-diagnosis processing is executed to check whether or not a corrective measure determined in the image diagnosis processing was appropriately performed. The re-diagnosis processing is performed with use of read image data obtained from a printed product printed after printing was resumed. By executing the re-diagnosis processing as described above, it is possible to confirm the reliability of the corrective measure.

In the second embodiment, an example is described in which whether or not the corrective measure was appropriately performed is determined based on an inspection result of a printed product printed first after printing was resumed, but there is no limitation to this example. In a more preferred example, whether or not the corrective measure for the previous image defect was appropriately performed may be determined based on results of inspection of a plurality of sheets printed after printing was resumed.

Also, depending on the image defect, there are a case where the image defect can be easily detected and a case where the image defect is difficult to detect due to a pattern on the sheet obtained as the printed product. For example, an image defect caused due to a coloring material cyclically falling in drops at unintended positions on the printed product can be easily detected in a region on the sheet where the amount of coloring materials is small, but may be difficult to detect in a high-density region where a large amount of coloring materials are applied. Therefore, it is also possible to determine whether or not to perform the diagnosis processing in step S1510 and the following steps based on characteristics of an image defect caused by the factor for which the corrective measure was taken in step S412 and the amount of coloring materials in each region of the input image data. In this case, it is possible to determine whether or not to perform the diagnosis processing for each read image data.

### Third Embodiment

Next, the following describes image diagnosis processing according to a third embodiment of the present invention. In the first embodiment described above, an example is described in which, if an image defect detected in a printed product satisfies a predetermined condition, a factor of the image defect is identified based on read image data of the printed product in which the image defect was detected. However, image diagnosis processing according to the present invention is not limited to this example described above.

For example, the image diagnosis processing may be performed to check the state of the image forming apparatus 101 after the image forming apparatus 101 is booted. In such a case, there is no read image data that has been read. Accordingly, it is desirable to print a test chart prepared in advance and perform the image diagnosis processing based on read image data of the test chart. In the third embodiment, an example is described in which the image diagnosis processing performed with use of the test chart is performed additionally to the image diagnosis processing performed based on read image data of a printed product as described in the first embodiment, and these two types of image diagnosis processing are switched according to the state of the main body of the image forming apparatus when the image diagnosis processing is to be performed. Note that the system configuration according to the third embodiment, the hardware configuration shown in FIG. 2, and the like are the same as those in the first embodiment, and therefore, descriptions thereof are omitted.

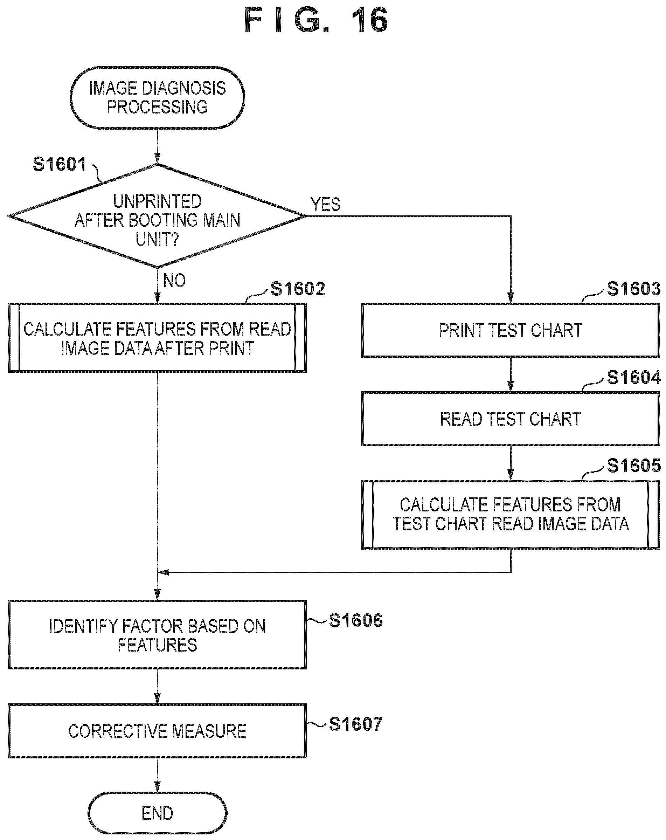

FIG. 16 is a flowchart for describing a flow of image diagnosis processing performed after printing is stopped for inspection in step S409 in the third embodiment. Processing that differs from the first embodiment is determination processing (step S1601) for determining whether or not the image forming apparatus 101 is in an unprinted state after the main body is rebooted and processing in steps S1603 to S1605 that is executed if it is determined in step S1601 that the image forming apparatus 101 is in the unprinted state. The following describes details of the processing in these steps, which differ from the first embodiment. The CPU 212 of the diagnosis unit 108 executes the processing in these steps. Step S 1601 starts when printed products including image defects are consecutively detected in step S409 in the first embodiment or an image diagnosis execution instruction is given from the user through the UI display unit 215.

In step S1601, the CPU 212 determines whether or not a job for creating a printed product is suspended in the printing unit 107 by making an inquiry to the printing unit 107. Upon determining that there is a suspended job, the processing proceeds to step S1603. On the other hand, if there is no suspended job, the processing proceeds to step S1602 and the CPU 212 calculates features from read image data of a printed product by performing the same processing as that performed in step S410 in the first embodiment. Then, in steps S1606 and S1607, the CPU 212 identifies a factor of an image defect based on the features and executes a corrective measure corresponding to the factor in the same manner as in steps S411 and S412 shown in FIG. 4.

On the other hand, if there is a suspended job, the CPU 212 gives an instruction to print a test chart to the printing unit 107 in step S1603 to cause the printing unit 107 to print the test chart.

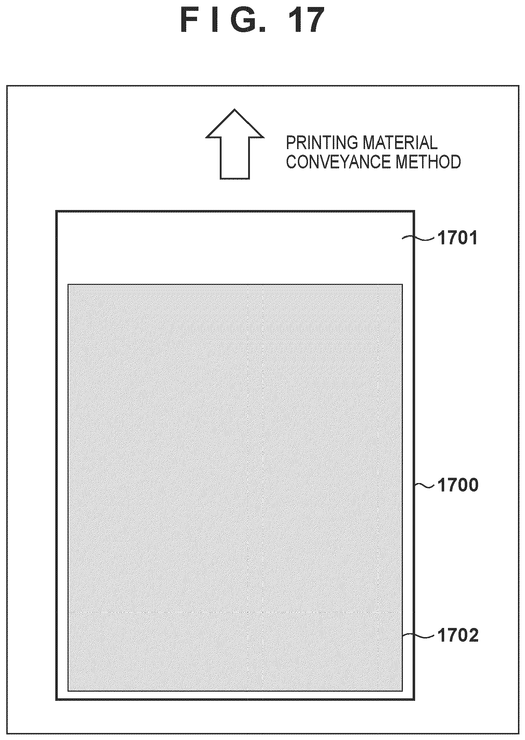

FIG. 17 depicts a view showing an example of the test chart that is used in the image diagnosis processing according to the third embodiment.

A test chart 1700 includes a non-image region 1701 in which it is easy to detect a stain adhering to an unintended position and an image region 1702 in which it is easy to detect color loss that is a phenomenon in which the printed product has a color lighter than an intended color. The non-image region 1701 is located at the leading edge of the test chart 1700 in the conveyance direction, and no image is formed in the non-image region 1701. The image region 1702 is located at a position other than the leading edge of the test chart 1700 in the conveyance direction, and an image is formed with a coloring material in the image region 1702. The image region 1702 shows an image of a single color with an area percentage of 50%, for example, and the test chart is printed on a total of four sheets by using CMYK, respectively. The CPU 251 of the external controller 102 transmits rasterized bitmap data of the test chart from the video I/F 258 via the video cable 106 to the video I/F 205 of the printing unit 107. The CPU 206 of the printing unit 107 performs halftone processing on the bitmap data of the test chart received by the video I/F 205, and prints the test chart with use of the print engine 203 based on image data obtained through the halftone processing. Note that the above-described configuration of the test chart is an example, and there is no limitation to this example. Although the test chart 1700 including the non-image region 1701 and the image region 1702 on a single page has been described, it is also possible to use a chart including the non-image region and the image region on different pages. Also, the image region 1702 may be printed with a mixture of two or more coloring materials to reduce the number of printing materials used to print the test chart. After printed products corresponding to the test chart are created and conveyed to the image reading device, the processing proceeds to step S1604.

In step S1604, the CPU 212 obtains read image data of the test chart printed in step S1603 by performing the same processing as that performed in step S401. After obtaining the read image data, the CPU 212 stores the read image data in the HDD 214 and the processing proceeds to step S1605. In step S1605, the CPU 212 calculates features of image defects from the read image data of the test chart based on the program stored in the feature calculation module 218 as in step S410. Here, processing performed in this step differs from the processing performed in step S410 in the region from which the features are detected. In step S410 of the first embodiment, read image data of a printed product is used, and therefore, it is necessary to identify regions in which it is easy to detect the features according to the pattern included in the printed product. In contrast, in the third embodiment, the features are calculated from the image region 1702 of the test chart having a uniform density, and therefore, the features can be calculated from the entire area of the read image data. After calculating the features and storing the features in the HDD 214, the processing proceeds to step S1606. In step S1606, the CPU 212 identifies factors of malfunctions of the image forming apparatus 101 and the image reading device based on the features stored in the HDD 214 by performing the same processing as that performed in step S411 of the first embodiment, and the processing then proceeds to step S1607. Corrective measures are taken in step S1607 in the same manner as in step S412, and therefore, descriptions thereof are omitted.

As described above, according to the third embodiment, the image diagnosis processing performed with use of the test chart is performed in addition to the image diagnosis processing performed based on read image data of a printed product, and these two types of image diagnosis processing are switched according to the state of the main body of the image forming apparatus when the image diagnosis processing is to be performed. By automatically switching the two types of image diagnosis processing without waiting for an instruction from the user, it is possible to reduce the downtime caused by the image diagnosis processing and suppress a reduction in the productivity of the image forming apparatus.

In this embodiment, an example is described in which features are calculated from read image data of the test chart when there is an unprinted job in the image forming apparatus, but there is no limitation to this example. For example, the test chart may be printed when it is difficult to identify factors of image defects only from read image data of a printed product.

As described above in step S802, the accuracy of calculation of features of an image defect may decrease depending on a pattern included in the read image data of the printed product. For example, if the pattern is printed with a large amount of coloring materials and has a high print density, an image defect that is a stain made by a coloring material adhering to an unintended position has a small difference from the reference image, and accordingly, the accuracy of calculation of the features is low, and it is difficult to narrow down factors. In such a case, it is desirable to stabilize the accuracy of calculation of the features by using read image data obtained from the test chart 1700 including the non-image region 1701 and the image region 1702 having a medium density. By stabilizing the accuracy of calculation of the features, it is possible to increase the accuracy of identification of the factor.

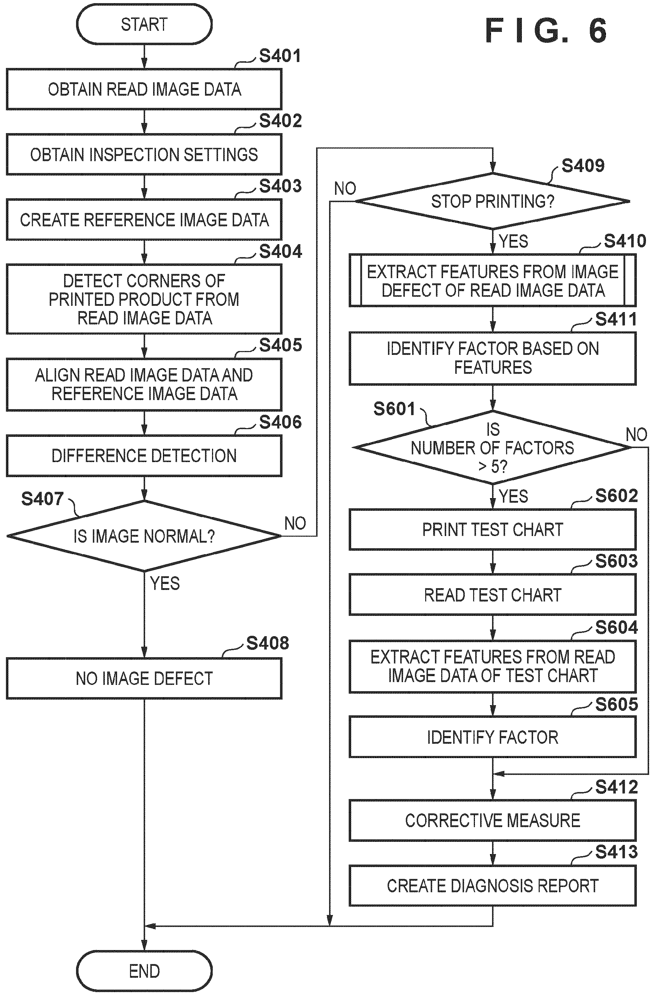

FIG. 6 is a flowchart for describing the image diagnosis processing performed by the diagnosis unit 108 according to the third embodiment. Note that processing common to FIG. 4 described above and in FIG. 6 is denoted with the same reference numbers as those used in FIG. 4, and descriptions thereof are omitted. Processing performed in each step shown in FIG. 6 is realized by the CPU 212 of the diagnosis unit 108 by executing a program loaded into the memory. The image diagnosis processing shown in FIG. 6 differs from that shown in FIG. 4 in that processing in steps S601 to S605 is performed between steps S411 and S412.

In step S601, the CPU 212 obtains a total number of factors of image defects identified in step S411, and obtains the maximum value of the total number of all factors of the image defects as a maximum factor number. The CPU 212 determines whether or not the maximum factor number exceeds a threshold, and the processing proceeds to step S602 if the maximum factor number exceeds the threshold. The threshold is set by comparing a downtime that occurs when the test chart is printed and a downtime that occurs when corrective measures corresponding to a plurality of factors are taken, and taking, as a reference, the number of factors for which the downtime that occurs when the test chart is printed is shorter than the downtime that occurs when corrective measures corresponding to the factors are taken. In the third embodiment, the threshold is set to 5, for example. Processing performed in steps S602 to S605 is the same as the processing in steps S 1603 to S 1606 shown in FIG. 16, and therefore, descriptions thereof are omitted.

As described above, according to the third embodiment, when it is anticipated that the downtime will become long if corrective measures are taken because the total number of factors of image defects is large and the factors are not sufficiently identified, the image diagnosis processing is performed by calculating features from the test chart. Thus, it is possible to keep the downtime from becoming long.

### Other Embodiments

Embodiments of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiments and/or that includes one or more circuits (e.g., application specific integrated circuit (ASIC)) for performing the functions of one or more of the above-described embodiments, and by a method performed by the computer of the system or apparatus by, for example, reading out and executing the computer executable instructions from the storage medium to perform the functions of one or more of the above-described embodiments and/or controlling the one or more circuits to perform the functions of one or more of the above-described embodiments. The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

## Claims

1. A printing system having an image forming apparatus (107) and a diagnostic apparatus (108), the printing system comprising:
image forming means for causing the image forming apparatus (107) to create a printed product corresponding to an input image;
detection means (S407) for causing the diagnostic apparatus (108) to detect an image defect included in a printed product that is created by the image forming apparatus (107) based on a read image obtained by reading the printed product;
obtaining means (S410) for causing the diagnostic apparatus (108) to obtain features of the detected image defect in a case where the image defect is detected; and
identifying means (S411) for causing the diagnostic apparatus (108) to identify a factor of the image defect based on the obtained features,
**characterized in that** the obtaining means causes the diagnostic apparatus (108) to determine, based on an amount of coloring materials used for each region of the input image, a region in the read image from which the features are to be obtained, and obtain the features of the image defect based on the determined region, and
wherein in a case where a predetermined condition for the detected image defect is satisfied, the obtaining means causes the image forming apparatus (107) to stop creation of a printed product and causes the diagnostic apparatus (108) to obtain the features of the image defect based on the read image obtained by reading the printed product.

2. The printing system according to claim 1,
wherein the predetermined condition includes a case where the number of printed products in which image defects have been consecutively detected by the detection means has reached a predetermined number.

3. The printing system according to claim 2,
wherein the predetermined condition further includes at least any of: a case where an image defect with a size or a shape that enables identification of a factor of the image defect is detected; a case where the printed product includes a plurality of image defects with a short cycle; and a case where many image defects appear at the same main scanning position.

4. The printing system according to any one of claims 1 to 3,
wherein the predetermined condition includes a case where the image defect is detected in the printed product after a corrective measure corresponding to the identified factor has been taken.

5. The printing system according to claim 4, further comprising:
determining means (S1512) for determining whether or not an image defect has occurred again due to the factor for which the corrective measure has been taken.

6. The printing system according to any one of claims 1 to 5,
wherein the amount of coloring materials is calculated for each region of the input image based on image data of the input image, and high-density regions in which the amount of coloring materials is equal to or larger than a certain amount are determined as regions in which it is possible to diagnose image defects.

7. The printing system according to any one of claims 1 to 5,
wherein the amount of coloring materials is calculated for each region of the input image based on image data of the input image, and low-density regions in which the amount of coloring materials is equal to or smaller than a certain amount are determined as regions in which it is possible to diagnose image defects.

8. The printing system according to any one of claims 1 to 7,
wherein the features include at least any of a shape, color, and size of the image defect and information regarding periodicity of the occurrence of the image defects in a conveyance direction of the printed product.

9. The printing system according to any one of claims 1 to 8,
wherein the diagnostic apparatus (108) further includes a storage that stores therein data indicating correspondence between the features of the image defect and components of the image forming apparatus (107), and
wherein the identifying means causes the diagnostic apparatus (108) to identify the factor of the image defect based on the obtained features and the data stored in the storage.

10. The printing system according to claim 9, further comprising:
an image reading device (331, 332) configured to read the printed product,
wherein the data stored in the storage further includes data indicating correspondence between the features of the image defect and components of the image reading device.

11. The printing system according to any one of claims 1 to 10,
wherein the diagnostic apparatus (108) further has presenting means (1100) configured to determine a corrective measure corresponding to the identified factor and present the corrective measure to a user.

12. The printing system according to any one of claims 1 to 11, further comprising:
a chart storage that stores chart data,
wherein, in a case where the predetermined condition is that the image forming apparatus (107) has not printed any printed product, the obtaining means causes the image forming apparatus (107) to print a test chart based on the chart data stored in the chart storage in a case that the predetermined condition is satisfied, and causes the diagnostic apparatus (108) to obtain features of the image defect based on a read image of the test chart.

13. An image processing apparatus (108) configured to detect an image defect in a printed product printed by an image forming apparatus (107), the image processing apparatus comprising:
detection means (216) for detecting an image defect included in the printed product based on a read image obtained by reading the printed product;
obtaining means (218) for obtaining features of the detected image defect in a case where the image defect is detected; and
identifying means (219) for identifying a factor of the image defect based on the obtained features,
**characterized in that** the obtaining means causes the image processing apparatus (108) to determine, based on an amount of coloring materials used for each region of the input image, a region in the read image from which the features are to be obtained, and obtain the features of the image defect based on the determined region, and
wherein, in a case that a predetermined condition for the detected image defect is satisfied, the obtaining means stops creation of a printed product by the image forming apparatus (107) and obtaining the features of the image defect based on the read image obtained by reading the printed product.

14. A method of controlling an image processing apparatus configured to detect an image defect in a printed product printed by an image forming apparatus (107), the method comprising:
detecting an image defect included in the printed product based on a read image obtained by reading the printed product;
obtaining features of the detected image defect in a case where the image defect is detected; and
identifying a factor of the image defect based on the obtained features,
**characterized by** determining, based on an amount of coloring materials used for each region of the input image, a region in the read image from which the features are to be obtained, and obtain the features of the image defect based on the determined region, and
wherein, in the obtaining the features, if a predetermined condition for the detected image defect is satisfied, creation of a printed product by the image forming apparatus (107) is stopped, and the features of the image defect are obtained based on the read image obtained by reading the printed product.

15. A computer program comprising instructions which when executed by an image processing apparatus according to claim 13 cause said apparatus to execute the method according to claims 14.

16. A computer-readable storage medium for storing the program according to claim 15.

## Patentansprüche

1. Drucksystem mit einer Bilderzeugungsvorrichtung (107) und einer Diagnosevorrichtung (108), wobei das Drucksystem aufweist:
eine Bilderzeugungseinrichtung zum Veranlassen der Bilderzeugungsvorrichtung (107), ein gedrucktes Produkt entsprechend einem Eingabebild zu erzeugen;
eine Erfassungseinrichtung (S407) zum Veranlassen der Diagnosevorrichtung (108), einen Bilddefekt, der in einem gedruckten Produkt umfasst ist, das durch die Bilderzeugungsvorrichtung (107) erzeugt wird, zu erfassen, basierend auf einem gelesenen Bild, das durch Lesen des gedruckten Produkts erhalten wird;
eine Erhaltungseinrichtung (S410) zum Veranlassen der Diagnosevorrichtung (108), Merkmale des erfassten Bilddefekts zu erhalten, in einem Fall, in dem der Bilddefekt erfasst wird; und
eine Identifizierungseinrichtung (S411) zum Veranlassen der Diagnosevorrichtung (108), einen Faktor des Bilddefekts basierend auf den erhaltenen Merkmalen zu identifizieren,
**dadurch gekennzeichnet, dass** die Erhaltungseinrichtung die Diagnosevorrichtung (108) veranlasst, basierend auf einem Betrag von Farbmaterialien, die für jeden Bereich des Eingabebildes verwendet werden, einen Bereich in dem gelesenen Bild, von dem die Merkmale erhalten werden sollen, zu bestimmen, und die Merkmale des Bilddefekts basierend auf der bestimmten Region zu erhalten, und
wobei, in einem Fall, in dem eine vorbestimmte Bedingung für den erfassten Bilddefekt erfüllt ist, die Erhaltungseinrichtung die Bilderzeugungsvorrichtung (107) veranlasst, eine Erzeugung eines gedruckten Produkts zu stoppen, und die Diagnosevorrichtung (108) veranlasst, die Merkmale des Bilddefekts basierend auf dem gelesenen Bild, das durch Lesen des gedruckten Produkts erhalten wird, zu erhalten.

2. Drucksystem gemäß Anspruch 1,
wobei die vorbestimmte Bedingung einen Fall umfasst, in dem die Anzahl von gedruckten Produkten, in denen Bilddefekte nacheinander durch die Erfassungseinrichtung erfasst wurden, eine vorbestimmte Anzahl erreicht hat.

3. Drucksystem gemäß Anspruch 2,
wobei die vorbestimmte Bedingung weiterhin zumindest eines der Folgenden umfasst: einen Fall, in dem ein Bilddefekt mit einer Größe oder Form, die einer Identifizierung eines Faktors des Bilddefekts ermöglicht, erfasst wird; einen Fall, in dem das gedruckte Produkt eine Vielzahl von Bilddefekten mit einem kurzen Zyklus umfasst; und einen Fall, in dem viele Bilddefekte an der gleichen Hauptabtastposition erscheinen.

4. Drucksystem gemäß einem der Ansprüche 1 bis 3,
wobei die vorbestimmte Bedingung einen Fall umfasst, in dem der Bilddefekt in dem gedruckten Produkt erfasst wird, nachdem eine korrigierende Maßnahme entsprechend dem identifizierten Faktor vorgenommen wurde.

5. Drucksystem gemäß Anspruch 4, weiterhin mit:
einer Bestimmungseinrichtung (S1512) zum Bestimmen, ob ein Bilddefekt aufgrund des Faktors, für den die korrigierende Maßnahme vorgenommen wurde, wieder aufgetreten ist oder nicht.

6. Drucksystem gemäß einem der Ansprüche 1 bis 5,
wobei der Betrag an Farbmaterialen für jeden Bereich des Eingabebildes basierend auf Bilddaten des Eingabebildes berechnet wird und Bereiche mit hoher Dichte, in denen der Betrag an Farbmaterialen gleich oder größer als ein bestimmter Betrag sind, als Bereiche bestimmt werden, in denen es möglich ist, Bilddefekte zu diagnostizieren.

7. Drucksystem gemäß einem der Ansprüche 1 bis 5,
wobei der Betrag an Farbmaterialien für jeden Bereich des Eingabebildes basierend auf Bilddaten des Eingabebildes berechnet wird und Bereiche mit niedriger Dichte, in denen der Betrag an Farbmaterialen gleich oder kleiner als ein bestimmter Betrag ist, als Bereiche bestimmt werden, in denen es möglich ist, Bilddefekte zu diagnostizieren.

8. Drucksystem gemäß einem der Ansprüche 1 bis 7,
wobei die Merkmale zumindest eines von einer Form, Farbe und Größe des Bilddefekts und Informationen bezüglich einer Periodizität des Auftretens der Bilddefekte in einer Beförderungsrichtung des gedruckten Produkts umfassen.

9. Drucksystem gemäß einem der Ansprüche 1 bis 8,
wobei die Diagnosevorrichtung (108) weiterhin einen Speicher umfasst, der darin Daten speichert, die eine Korrespondenz zwischen den Merkmalen des Bilddefekts und Komponenten der Bilderzeugungsvorrichtung (107) speichern, und
wobei die Identifizierungseinrichtung die Diagnosevorrichtung (108) veranlasst, den Faktor des Bilddefekts basierend auf den erhaltenen Merkmalen und den Daten, die in dem Speicher gespeichert sind, zu identifizieren.

10. Drucksystem gemäß Anspruch 9, weiterhin mit:
einer Bildleseeinrichtung (331, 332), die dazu konfiguriert ist, das gedruckte Produkt zu lesen,
wobei die Daten, die in dem Speicher gespeichert sind, weiterhin Daten umfassen, die eine Korrespondenz zwischen den Merkmalen des Bilddefekts und Komponenten der Bildleseeinrichtung angeben.

11. Drucksystem gemäß einem der Ansprüche 1 bis 10,
wobei die Diagnosevorrichtung (108) weiterhin eine Präsentierungseinrichtung (1100) umfasst, die dazu konfiguriert ist, eine korrigierende Maßnahme entsprechend dem identifizierten Faktor zu bestimmen und die korrigierende Maßnahme dem Benutzer zu präsentieren.

12. Drucksystem gemäß einem der Ansprüche 1 bis 11, weiterhin mit:
einem Diagrammspeicher, der Diagrammdaten speichert,
wobei, in einem Fall, in dem die vorbestimmte Bedingung eine ist, dass die Bilderzeugungsvorrichtung (107) kein gedrucktes Produkt gedruckt hat, die Erhaltungseinrichtung die Bilderzeugungsvorrichtung (107) veranlasst, ein Testdiagramm basierend auf den Diagrammdaten, die in dem Diagrammspeicher gespeichert sind, zu drucken, in einem Fall, dass die vorbestimmte Bedingung erfüllt ist, und die Diagnosevorrichtung (108) veranlasst, Merkmale des Bilddefekts basierend auf einem gelesenen Bild des Testdiagramms zu erhalten.

13. Bildverarbeitungsvorrichtung (108), die dazu konfiguriert ist, einen Bilddefekt in einem gedruckten Produkt, das durch eine Bilderzeugungsvorrichtung (107) gedruckt ist, zu erfassen, wobei die Bildverarbeitungsvorrichtung aufweist:
eine Erfassungseinrichtung (216) zum Erfassen eines Bilddefekts, der in dem gedruckten Produkt umfasst ist, basierend auf einem gelesenen Bild, das durch Lesen des gedruckten Produkts erhalten wird;
eine Erhaltungseinrichtung (218) zum Erhalten von Merkmalen des erfassten Bilddefekts in einem Fall, in dem der Bilddefekt erfasst wird; und
eine Identifizierungseinrichtung (219) zum Identifizieren eines Faktors des Bilddefekts basierend auf den erhaltenen Merkmalen,
**dadurch gekennzeichnet, dass** die Erhaltungseinrichtung die Bildverarbeitungsvorrichtung (108) veranlasst, basierend auf einem Betrag an Farbmaterialien, die für jeden Bereich des Eingabebildes verwendet werden, einen Bereich in dem gelesenen Bild, von dem die Merkmale erhalten werden sollen, zu bestimmen, und die Merkmale des Bilddefekts basierend auf der bestimmten Region zu erhalten, und
wobei, in einem Fall, dass eine vorbestimmte Bedingung für den erfassten Bilddefekt erfüllt ist, die Erhaltungseinrichtung eine Erzeugung eines gedruckten Produkts durch die Bilderzeugungsvorrichtung (107) stoppt und die Merkmale des Bildeffekts basierend auf dem gelesenen Bild, das durch Lesen des gedruckten Produkts erhalten wird, erhalten werden.

14. Verfahren des Steuerns einer Bildverarbeitungsvorrichtung, die dazu konfiguriert ist, einen Bilddefekt in einem gedruckten Produkt, das durch eine Bilderzeugungsvorrichtung (107) gedruckt wird, zu erfassen, wobei das Verfahren aufweist:
Erfassen eines Bilddefekts, der in dem gedruckten Produkt umfasst ist, basierend auf einem gelesenen Bild, das durch Lesen des gedruckten Produkts erhalten wird,
Erhalten von Merkmalen des erfassten Bilddefekts in einem Fall, in dem der Bilddefekt erfasst wird; und
Identifizieren eines Faktors des Bilddefekts basierend auf den erhaltenen Merkmalen,
**gekennzeichnet durch** Bestimmen, basierend auf einem Betrag an Farbmaterialien, die für jeden Bereich des Eingabebildes verwendet werden, eines Bereichs in dem gelesenen Bild, von dem die Merkmale erhalten werden sollen, und Erhalten der Merkmale des Bilddefekts basierend auf dem bestimmten Bereich, und
wobei, beim Erhalten der Merkmale, wenn eine vorbestimmte Bedingung für den erfassten Bilddefekt erfüllt ist, eine Erzeugung eines gedruckten Produkts durch die Bilderzeugungsvorrichtung (107) gestoppt wird und die Merkmale des Bilddefekts basierend auf dem gelesenen Bild, das durch Lesen des gedruckten Produkts erhalten wird, erhalten wird.

15. Computerprogramm mit Anweisungen, die, wenn diese durch eine Bildverarbeitungsvorrichtung gemäß Anspruch 13 ausgeführt werden, die Vorrichtung veranlassen, das Verfahren gemäß Anspruch 14 auszuführen.

16. Computerlesbares Speichermedium zum Speichern des Programms gemäß Anspruch 15.

## Revendications

1. Système d'impression ayant un appareil de formation d'image (107) et un appareil de diagnostic (108), le système d'impression comprenant :
des moyens de formation d'image pour amener l'appareil de formation d'image (107) à créer un produit imprimé correspondant à une image d'entrée ;
un moyen de détection (S407) pour amener l'appareil de diagnostic (108) à détecter un défaut d'image inclus dans un produit imprimé qui est créé par l'appareil de formation d'image (107) sur la base d'une image lue obtenue par lecture du produit imprimé ;
des moyens d'obtention (S410) pour amener l'appareil de diagnostic (108) à obtenir des caractéristiques du défaut d'image détecté dans un cas où le défaut d'image est détecté ; et
des moyens d'identification (S411) pour amener l'appareil de diagnostic (108) à identifier un facteur du défaut d'image sur la base des caractéristiques obtenues,
**caractérisé en ce que** les moyens d'obtention amènent l'appareil de diagnostic (108) à déterminer, sur la base d'une quantité de matières colorantes utilisées pour chaque région de l'image d'entrée, une région dans l'image lue à partir de laquelle les caractéristiques doivent être obtenues, et à obtenir les caractéristiques du défaut d'image sur la base de la région déterminée, et
dans lequel, dans un cas où une condition prédéterminée pour le défaut d'image détecté est remplie, le moyen d'obtention amène l'appareil de formation d'image (107) à arrêter la création d'un produit imprimé et amène l'appareil de diagnostic (108) à obtenir les caractéristiques du défaut d'image sur la base de l'image lue obtenue par lecture du produit imprimé.

2. Système d'impression selon la revendication 1,
dans lequel la condition prédéterminée inclut un cas où le nombre de produits imprimés dans lesquels des défauts d'image ont été détectés consécutivement par les moyens de détection a atteint un nombre prédéterminé.

3. Système d'impression selon la revendication 2,
dans lequel la condition prédéterminée inclut en outre au moins l'un parmi : un cas où un défaut d'image avec une taille ou une forme qui permet l'identification d'un facteur du défaut d'image est détecté ; un cas où le produit imprimé inclut une pluralité de défauts d'image avec un cycle court ; et un cas où de nombreux défauts d'image apparaissent au niveau de la même position de balayage principale.

4. Système d'impression selon l'une quelconque des revendications 1 à 3,
dans lequel la condition prédéterminée inclut un cas où le défaut d'image est détecté dans le produit imprimé après qu'une mesure corrective correspondant au facteur identifié a été prise.

5. Système d'impression selon la revendication 4, comprenant en outre :
des moyens de détermination (S1512) pour déterminer si un défaut d'image s'est à nouveau produit ou non en raison du facteur pour lequel la mesure corrective a été prise.

6. Système d'impression selon l'une quelconque des revendications 1 à 5,
dans lequel la quantité de matières colorantes est calculée pour chaque région de l'image d'entrée sur la base de données d'image de l'image d'entrée, et des régions à haute densité dans lesquelles la quantité de matières colorantes est égale ou supérieure à une certaine quantité sont déterminées comme des régions dans lesquelles il est possible de diagnostiquer des défauts d'image.

7. Système d'impression selon l'une quelconque des revendications 1 à 5,
dans lequel la quantité de matières colorantes est calculée pour chaque région de l'image d'entrée sur la base de données d'image de l'image d'entrée, et des régions à faible densité dans lesquelles la quantité de matières colorantes est égale ou inférieure à une certaine quantité sont déterminées comme des régions dans lesquelles il est possible de diagnostiquer des défauts d'image.

8. Système d'impression selon l'une quelconque des revendications 1 à 7,
dans lequel les caractéristiques incluent au moins l'une quelconque parmi une forme, une couleur et une taille du défaut d'image et des informations concernant la périodicité de l'occurrence des défauts d'image dans une direction de transport du produit imprimé.

9. Système d'impression selon l'une quelconque des revendications 1 à 8,
dans lequel l'appareil de diagnostic (108) inclut en outre un dispositif de stockage qui stocke à l'intérieur des données indiquant une correspondance entre les caractéristiques du défaut d'image et des composants de l'appareil de formation d'image (107), et
dans lequel les moyens d'identification amènent l'appareil de diagnostic (108) à identifier le facteur du défaut d'image sur la base des caractéristiques obtenues et des données stockées dans le dispositif de stockage.

10. Système d'impression selon la revendication 9, comprenant en outre :
un dispositif de lecture d'image (331, 332) configuré pour lire le produit imprimé,
dans lequel les données stockées dans le dispositif de stockage incluent en outre des données indiquant une correspondance entre les caractéristiques du défaut d'image et des composants du dispositif de lecture d'image.

11. Système d'impression selon l'une quelconque des revendications 1 à 10,
dans lequel l'appareil de diagnostic (108) comporte en outre des moyens de présentation (1100) configurés pour déterminer une mesure corrective correspondant au facteur identifié et présenter la mesure corrective à un utilisateur.

12. Système d'impression selon l'une quelconque des revendications 1 à 11, comprenant en outre :
un dispositif de stockage de diagramme qui stocke des données de diagramme,
dans lequel, dans un cas où la condition prédéterminée est que l'appareil de formation d'image (107) n'a imprimé aucun produit imprimé, les moyens d'obtention amènent l'appareil de formation d'image (107) à imprimer un diagramme de test sur la base des données de diagramme stockées dans le dispositif de stockage de diagramme dans un cas où la condition prédéterminée est remplie, et amène l'appareil de diagnostic (108) à obtenir des caractéristiques du défaut d'image sur la base d'une image lue du diagramme de test.

13. Appareil de traitement d'image (108) configuré pour détecter un défaut d'image dans un produit imprimé, imprimé par un appareil de formation d'image (107), l'appareil de traitement d'image comprenant :
des moyens de détection (216) pour détecter un défaut d'image inclus dans le produit imprimé sur la base d'une image lue obtenue par lecture du produit imprimé ;
des moyens d'obtention (218) pour obtenir des caractéristiques du défaut d'image détecté dans un cas où le défaut d'image est détecté ; et
des moyens d'identification (219) pour identifier un facteur du défaut d'image sur la base des caractéristiques obtenues,
**caractérisé en ce que** les moyens d'obtention amènent l'appareil de traitement d'image (108) à déterminer, sur la base d'une quantité de matières colorantes utilisées pour chaque région de l'image d'entrée, une région dans l'image lue à partir de laquelle les caractéristiques doivent être obtenues, et à obtenir les caractéristiques du défaut d'image sur la base de la région déterminée, et dans lequel, dans un cas où une condition prédéterminée pour le défaut d'image détecté est remplie, les moyens d'obtention arrêtent la création d'un produit imprimé par l'appareil de formation d'image (107) et obtiennent les caractéristiques du défaut d'image sur la base de l'image lue obtenue par lecture du produit imprimé.

14. Procédé de commande d'un appareil de traitement d'image configuré pour détecter un défaut d'image dans un produit imprimé, imprimé par un appareil de formation d'image (107), le procédé comprenant :
la détection d'un défaut d'image inclus dans le produit imprimé sur la base d'une image lue obtenue par lecture du produit imprimé ;
l'obtention de caractéristiques du défaut d'image détecté dans un cas où le défaut d'image est détecté ; et
l'identification d'un facteur du défaut d'image sur la base des caractéristiques obtenues,
**caractérisé par** la détermination, sur la base d'une quantité de matières colorantes utilisées pour chaque région de l'image d'entrée, d'une région dans l'image lue à partir de laquelle les caractéristiques doivent être obtenues, et l'obtention des caractéristiques du défaut d'image sur la base de la région déterminée, et
dans lequel, lors de l'obtention des caractéristiques, si une condition prédéterminée pour le défaut d'image détecté est remplie, la création d'un produit imprimé par l'appareil de formation d'image (107) est arrêtée, et les caractéristiques du défaut d'image sont obtenues sur la base de l'image lue obtenue par lecture du produit imprimé.

15. Programme informatique comprenant des instructions qui, lorsqu'elles sont exécutées par un appareil de traitement d'image selon la revendication 13, amènent ledit appareil à exécuter le procédé selon la revendication 14.

16. Support de stockage lisible par ordinateur pour stocker le programme selon la revendication 15.
